(19) Europäisches Patentamt
European Patent Office
Office européen des brevets

(11) **EP 1 092 964 B1**

(12) **EUROPÄISCHE PATENTSCHRIFT**

(45) Veröffentlichungstag und Bekanntmachung des Hinweises auf die Patenterteilung:
**12.12.2007 Patentblatt 2007/50**

(51) Int Cl.:
***G01H 3/08*** *(2006.01)* ***G01H 3/14*** *(2006.01)*

(21) Anmeldenummer: **00121263.8**

(22) Anmeldetag: **05.10.2000**

(54) **Vorrichtung zur Geräuscherkennung und Geräuschtrennung**

Apparatus for noise recognition and noise separation

Dispositif de reconnaisance et séparation du bruit

(84) Benannte Vertragsstaaten:
**AT BE CH CY DE DK ES FI FR GB GR IE IT LI LU MC NL PT SE**

(30) Priorität: **14.10.1999 DE 19949637**
**26.01.2000 DE 20001263 U**

(43) Veröffentlichungstag der Anmeldung:
**18.04.2001 Patentblatt 2001/16**

(73) Patentinhaber:
• **deBAKOM, Gesellschaft für sensorische Messtechnik mbH**
**51519 Odenthal (DE)**
• **Kiwitz, André**
**27570 Bremerhaven (DE)**

(72) Erfinder:
• **Dietrich Kühner**
**51519 Odenthal (DE)**

• **André Kiwitz**
**27570 Bremerhaven (DE)**

(74) Vertreter: **Springorum, Harald et al**
**Kiani & Springorum**
**Patent- und Rechtsanwälte**
**Taubenstrasse 4**
**40479 Düsseldorf (DE)**

(56) Entgegenhaltungen:
**WO-A-95/29413 US-A- 5 501 105**

• **MONTANA D ET AL: "Neural-network-based classification of acoustic transients" NEURAL NETWORKS FOR OCEAN ENGINEERING, 1991., IEEE CONFERENCE ON WASHINGTON, DC, USA 15-17 AUG. 1991, NEW YORK, NY, USA,IEEE, US, 15. August 1991 (1991-08-15), Seiten 247-254, XP010053588 ISBN: 0-7803-0205-2**

**Beschreibung**

Die vorliegende Erfindung betrifft Vorrichtungen zur Geräuscherkennung und -trennung sowie Lärmüberwachung.

Im Rahmen von automatischen Schallmessungen ohne menschliche Bedienung stellt sich neben der Frage, wie laut es an einem bestimmten Ort ist, fast immer das Problem, die zugehörigen lärmerzeugenden Quellen zu identifizieren und ihre Anteile zu bestimmen. Nur in offensichtlichen Fällen, in denen eine Lärmquelle dominiert, fällt dies leicht. Da die Schallimmision stark von Ausbreitungsbedingungen und Tageszeiten abhängt, können die Anteile an einem Immissionsort erheblich variieren.

Vielfach ist es jedoch nicht möglich die Lärmquelle eindeutig zu identifizieren; sie muß erst aufwendig gesucht werden. Ist ein vermeintlicher Verursacher dann ausgemacht, so kann mittels eines Vergleiches zwischen der jeweiligen Situation bei an- und abgeschalteter vermeintlicher Quelle versucht werden, die Annahme über die Lärmquelle zu verifizieren. Dieses Verfahren stößt wegen der genannten Varianz schnell an Grenzen.

So denke man etwa daran, daß Fluglärm neben dem Lärm an einer vielbefahrenen Autobahn erfaßt werden soll, der bei belebter Straße auch des Nachts nicht verstummt. Um in einem solchen Falle sicher zu gehen, wäre es hier erforderlich, die Straße für zumindest einen gewissen Zeitraum zu sperren, was sicherlich nur in Ausnahmefällen möglich ist.

Auch stellt sich, selbst wenn die einzelnen Schallquellen identifiziert sind, ofunals das Problem, daß aus einer Vielzahl von unterschiedlichen Quellen nur eine ganz bestimmte Schallquelle gemessen oder überwacht werden soll. Dies kann jedoch nur dann geschehen, wenn die zu überwachende Schallquelle aus dem gesamten akustischen Signal heraus erkannt und von den anderen getrennt werden kann.

Es gibt hierzu bereits Lösungsansätze, wie etwa solche, die WO 95/29413 oder auch die US 5 501 105 bekannt sind, wobei die WO 95/29413 ein Klassifikationssystem für Schallquellen und die US 5 501 105 ein Analysesystem zur Erkennung von Resonanzen in Maschinen mit Rotationsteilen betrifft.

Beide zerlegen ihr über die Zeit aufgenommenes Eingangssignal zunächst in sein Frequenzspektrum und versuchen sodann, das so erhaltene Signal mittels eines neuronalen Netzwerks zu klassifizieren.

Daher ist es Aufgabe der vorliegenden Erfindung, eine Vorrichtung anzugeben, die es ermöglicht, ein akustisches Signal nach seiner Art selbsttätig zu klassifizieren und so eine vollautomatische Geräuscherkennung zu ermöglichen, wobei hier für die Zwecke der Beschreibung und Beanspruchung der vorliegenden Erfindung unter Klassifikation insbesondere die Zuordnung eines akustischen Signals zu einer Quelle oder einem Quellentyp verstanden werden soll.

Diese Aufgabe wird erfindungsgemäß gelöst durch eine Vorrichtung zur Geräuscherkennung in akustischen Signalen gemäß Anspruch 1, mit zumindest einer Renormierungseinrichtung, die Mittel vorsieht, die jeweils zum Empfang der Amplitude eines bestimmten Frequenzbandes aus dem Frequenzspektrum des akustischen Signals dienen, sowie Mittel, die diese Amplitude oder Amplituden so renormiert bezichungsweise renormieren, daß nach der Renormierung die Amplituden nur noch in ihren relativen Verhältnissen zueinander vorliegen und weiterhin einer Differenzierungseinrichtung, die Mittel vorsieht, die die renormierte Amplitude oder renormierten Amplituden nach der Zeit zumindest einfach ableitet bezichungsweise ableiten oder die die renormierte Amplitude oder renormierten Amplituden nach der Zeit zumindest einfach ableitet bezichungsweise ableiten und hernach aus der nach der Zeit abgeleiteten Amplitude oder den nach der Zeit abgeleiteten Amplituden den jeweiligen Absolutbetrag ohne negatives Vorzeichen bilden, sowie mit einem neuronalen Netzwerk mit Eingangsneuronen, Ausgangsneuronen und mit Gewichten versehenen Verbindungen zwischen den Neuronen, wobei die Eingangsneuronen, jeweils zum Empfang der renormierten und nach der Zeit abgeleiteten Amplitude eines bestimmten Frequenzbandes aus dem Frequenzspektrum des akustischen Signals oder deren jeweiligen Absolutbetrages vorgesehen sind, und die Ausgangsneuronen zumindest ein Klassifikations-Signal erzeugen, welches das akustische Signal entsprechend seinem Frequenzspektrum klassifiziert, wobei das Klassifikationssignal oder die Klassifikationssignale Aufschluß über die Art des akustischen Signals gibt bezichungsweise geben.

Dabei gelingt die Klassifikation des Signals durch die erfindungsgemäße Vorrichtung deshalb so gut, weil nämlich überraschenderweise gefunden wurde, daß der zur Klassifikation besonders gut taugende Signalinhalt (Signalmuster) in der relativen Energieverschiebung über die Zeit im Frequenzspektrum des akustischen Signals liegt.

Die Renormierungseinrichtung hat sich somit als vorteilhaft erwiesen, da bei ihrem Einsatz nicht die Pegel der einzelnen Frequenzen des betrachteten Frequenzbandes als Amplituden verarbeitet werden, sondern als Amplituden nur noch ihre Intensitäten als Ausdruck ihrer relativen Verhältnisse zueinander verwendet werden. Dies wird durch die Verwendung einer Renormierungseinrichtung erreicht, die die Verhältnisse der Amplituden zueinander wahrt.

Hingegen berücksichtigt die Differenzierungseinrichtung die zeitliche Energievesrschiebung im Spektrum, ohne jedoch dem Umstand Rechnung zutragen, daß es sich hierbei nicht auf die absoluten Verhältnisse der Energien ankommt. Es sei hierbei bemerkt, daß hierzu auch die höheren Ableitungen des Frequenzspektrums nach der Zeit statt der einfachen Ableitung Verwendung finden können.

Erst das Zusammenwirken beider vorgenannter Vorrichtungen ermöglicht es nun, die in der in der relativen Energieverschiebung über die Zeit im Frequenzspektrum des akustischen Signals liegenden Musterstrukturen signaltechnisch freizulegen, die sich für eine weitere Klassifizierung und damit Erkennung durch das nachgeschaltete neuronale Netz eignen.

So gibt das Klassifikationssignal des neuronalen Netzes, in dem es Aufschluß über die Art des akustischen Signals gibt, insbesondere auch Aufschluß über seine Quelle. Dabei kann etwa der charakteristische Laut einer Amsel unabhängig von ihrer Entfernung zum auf-nehmenden Mikrofon - seien es nun 10 m oder 100 m - identifiziert werden, da die entfernungsabhängige aufgenommene Energie hier für die Erzeugung des Klassifikationsmusters aufgrund der Renormierung irrelevant ist.

Die erfindungsgemäße Vorrichtung zur Geräuscherkennung ist somit in der Lage, das akustische Signal, insbesondere nach Quellen, zu klassifizieren, wobei der eigentliche Klassifikationsprozeß der einmal technisch freigelegten Signalmuster durch ein künstliches neuronales Netz erfolgt, das die aus dem akustischen Signal erfindungsgemäß erzeugten Signalmuster bei entsprechendem Trainingsverfahren gut zu klassifizieren in der Lage ist.

Ergänzend sei schon hier erwähnt, daß es ebenso möglich ist, daß die Eingangsneuronen des verwendeten neuronalen Netzes sowohl zum Empfang der jeweiligen Amplitude, wie auch ihrer Ableitung vorgesehen sind; eine Möglichkeit der im Rahmen der Diskussion der Verbesserungsmöglichkeiten der vorliegenden Erfindung im weiteren noch die Aufmerksamkeit gilt.

Vorzugsweise eignen sich für die vorliegende Aufgabe klassifizierende künstliche neuronale Netze, wie etwa Single Cluster Learning Netze, besonders bevorzugterweise solche, die nach der Methode der Vector Quantisierung arbeiten. Auch Multi Cluster Netze, vorzugsweise solche, die selbstlernend und/oder selbstorganisierend (etwa selbstorganisierende Karten) funktionieren, eignen sich im Rahmen der vorliegenden Erfindung. Als ein Beispiel, eines für die vorliegende Erfindung geeigneten Netzwerktyps, seien hier die Kohonen Netze genannt.

Als Trainingsmethoden für künstliche neuronale Netze kommen für die vorliegende Erfindung eine Reihe von dem Fachmann bekannten Verfahren in Betracht, wozu auch bereits etliche Literatur verfügbar ist (vgl. so etwa: Nauck, D. et al., Neuronale Netze, Braunschweig/Wiesbaden 1994). Allgemein gesprochen dient der Trainingsprozess dabei der aufgabengeeigneten Veränderung der Gewichte der Verbindungen zwischen den Neuronen und zwar so lange, bis das neuronale Netzwerk seine Klassifikationsaufgabe zufriedenstellend erfüllt. Dabei erfolgt der Trainingsprozess üblicherweise meist in einer der eigentlichen Betriebsphase vorgeschalteten überwachten Trainingsphase, in der das Netz nur lernt, also trainiert wird und noch nicht in Betrieb ist. Darüber hinaus existieren jedoch auch Trainingsmethoden, die das neuronale Netz unüberwacht lernen lassen, was auch ein betriebsbegleitendes Lernen ermöglicht, das kontinuierlich zur Verbesserung der Leistung des Netzes beitragen kann. Wie bereits vorstehend erwähnt, stehen dem Fachmann hier im Einzelfall somit eine Reihe von Möglichkeiten zum zweckentsprechenden Training des künstlichen neuronalen Netzes offen, die auf unterschiedlichen Wegen mehr oder weniger schnell zum angestrebten Ziel eines das akustische Signal klassifizierenden Netzes führen, da sich neuronale Netze zur Klassifikation von Signalmustern grundsätzlich gut eignen. Akustische Signale aus gleicher Quelle ähneln dabei einander in ihrem erfindungsgemäß renormierten und abgeleiteten Frequenzspektrum. Das neuronale Netz vermag, wenn es die Amplituden der verschiedenen renormierten und abgeleiteten Frequenzbänder des zu identifizierenden akustischen Signals als Eingangssignal erhält dann ein der Schallquelle, der das akustische Signal entstammt, zugehöriges Klassifikationssignal zu erzeugen und so Aufschluß über die Art und insbesondere die Quelle des akustischen Signals zu geben. Die Anzahl und Breite der Frequenzbänder, wie auch der Bereich, den sie abdecken, ist dabei der zugrundeliegenden Problemstellung anzupassen. Anzahlen von 20 oder besser noch von 40 Frequenzbändern haben sich dabei bewährt.

In Versuchen hat sich gezeigt, daß sogar ein recht einfach ausgelegtes künstliches neuronales Netz mit nur zwei Layern und ohne Hidden-Layer schon geeignet ist, die Aufgabenstellung zu erfüllen. Dabei empfangen die Eingangsneuronen im ersten Layer die renormierten und abgeleiteten Amplituden der zu betrachtenden Frequenzbänder, wobei sich hier 20 Bänder, die zusammen genommen einen Bereich von 16 Hz - 20 KHz, vorzugsweise 16 Hz bis 16 KHz abdecken gut bewährt haben. Je Frequenzband, also je zu empfangender renormierter und abgeleiteter Amplitude kann dabei ein Eingang je Neuron in diesem ersten Layer vorgesehen sein. Die Anzahl der Neuronen dieses ersten Layers (Eingangslayer) wird dabei vorzugsweise so gewählt, daß sie der Anzahl der verwendeten Frequenzbänder entspricht. Auch hat es sich bewährt die Eingänge der Neuronen des ersten Layers, also die empfangenen renormierten und abgeleiteten Amplituden nicht mit Gewichten zu versehen, sondern den Eingangsneuronen ungewichtet zuzuleiten. Für die Einggangsneuronen selbst hat sich die Identitätsfunktion (**Id**) als Transferfunktion (Übergangsfunktion) als geeignet herausgestellt. Die Eingangsneuronen sind sodann vorzugsweise jeweils mit allen Neuronen einer Ausgangsschicht (Ausgangslayer) verbunden, wobei die Anzahl der Neuronen dieser Schicht, also die Anzahl der Ausgangsneuronen vorzugsweise gleich der Anzahl der zu erkennenden Geräusche gewählt wird. Jedes Ausgangsneuron gibt dann vorzugsweise selbst wiederum jeweils ein Ausgangssignal (Klassifikationssignal) aus, welches Aufschluß über die Art des akustischen Signals gibt. Als Übergangsfunktion für die Ausgangsneuronen hat sich dabei die Sigmoid-Fuktion (σ-Funktion) bewährt. Die Verbindungen zwischen den Neuronen des Eingangslayers und denen des Ausgangslayers sind vorzugsweise mit Gewichten $\omega_{ij}$ (als dem Gewicht der Verbindung vom Neuron Nr. **i** des Eingangslayers zum Neuron Nr. **j** des Ausgangslayers) versehen.

Um das Netz nun zu trainieren hat sich folgende Verfahrensweise als recht praktikabel herausgestellt: Zu Anfang werden die Gewichte $\omega_{ij}$ zufällig entsprechend einer Gauß Verteilung gewählt. Sodann wird dem Netz über die Eingänge der Eingangsneuronen das renormierte und abgeleitete Spektrum eines akustischen Signals präsentiert, von dem bekannt ist, welcher Art es ist. Nun werden die von den Ausgangsneuronen erzeugten Klassifikationssignale (Ist-Klassifikationssignale) mit den für dieses akustische Signal erwarten Klassifikationssignalen (SollKlassifikationssignale) verglichen und aus der Abweichung ein Maß für die Güte der Signalklassifikation gebildet. Vorzugsweise geschieht dies durch die Verwendung eines Fitness-Maßes wie folgt,

$$Fitness = \sum_{k=1}^{p} \left( SollKlassifikationssignal_k - IstKlassifikationssignal_k \right)^2$$

wobei p die Anzahl der erzeugten Klassifikationssignale ist. Diese Fitness ist um so günstiger, je näher sie an 0 liegt und für den Wert 0 optimal, da dann die SollKlassifikationssignale nicht mehr von den IstKlassifikationssignalen abweichen. Nun wird ein einzelnes $\omega_{ij}$ (vorzugsweise zufällig) ausgewählt und sein aktueller Wert zufällig (entsprechend einer Gauß Verteilung) verändert. Sodann wird wiederum die Fitness ermittelt. Ist die Fitness des Netzes günstiger geworden, so wird der neue Wert beibehalten und dieser neue Wert für $\omega_{ij}$ wiederum zufällig verändert; dies geschieht solange, bis keine Verbesserung der Fitness mehr eintritt; ein zweckmäßig gewähltes Abbruchkriterien, für das verschiedene Heuristiken in Frage kommen (etwa ein Abbruch nach einer konstanten Anzahl (vorzugsweise zehn) von Versuchen, die keine Verbesserung mehr ergeben haben) dient dabei der Beendigung des Verbesserungsvorganges. Sodann wird die Varianz der Gauß Verteilung für die zufällige Veränderung des ausgewählten $\omega_{ij}$ verändert und der Veränderungsprozess für das $\omega_{ij}$ und der zugehörige Überprüfungsprozess der zugehörigen Fitness des Netzes wie vorstehend beschrieben wieder durchlaufen. Kann auch mit einer Veränderung der Varianz keine Fitness-Verbesserung mehr erzielt werden, so wird das nächste Gewicht $\omega_{ij}$ (vorzugsweise zufällig) ausgewählt und dem gleichen Prozess unterzogen, hiernach wiederum das nächste Gewicht und so weiter, bis schließlich alle Gewichte $\omega_{ij}$ auf diese Weise angepaßt wurden. Dies Verfahren führt man für eine Reihe möglichst repräsentativer Vertreter für die verschiedenen Klassen zu erkennender akustischer Signale durch und erhält als Resultat schließlich ein Netz, welches in der Lage ist, für ein gegebenes akustisches Signal nach Renormierung und Ableitung seines Spektrums Klassifikationssignale zu erzeugen, die Aufschluß über die Art des akustischen Signals geben.

Alternativ zu den vorstehenden Ausführungen eignen sich, wie bereits erwähnt auch unüberwachte, evtl. betriebsbegleitende Trainingsmethoden, wie sie etwa im Rahmen der selbstorganisierenden Karten (SOM ≈ self organizing maps) zur Anwendung kommen im Rahmen der Ausführung der vorliegenden Erfindung. Beim Training der selbstorganisierenden Karten wird ein Eingabevektor $X = (x_1, ..., x_n)$ vorzugsweise parallel mit allen Gewichtsvektoren $W_j = (w_{1j}, ..., w_{nj})$ verglichen. Als Metrik zum Vergleich finden dabei vorzugsweise die euklidische Norm oder besonders bevorzugterweise das Skalarprodukt

$$\left\langle X \middle| W_j \right\rangle = \sum_i x_i\, w_{ij}$$

Verwendung, wobei sich letzteres insbesondere bei normalisierten Vektoren eignet. Das Neuron nun, dessen Gewichte (dessen Gewichtsvektor), im Rahmen der gewählten Metrik, dem Eingabevektor X am nächsten kommt bzw. am ähnlichsten ist, wird nun ausgewählt, um seinen Gewichtsvektor dem Eingangsvektor noch ähnlicher zu machen. Vorzugsweise geschieht dies durch Addition oder Subtraktion eines variablen Bruchteiles des Differenzvektors $X - W_j$ zum Gewichtsvektor $W_j$.

Weiterhin kann die Renormierungseinrichtung so ausgestaltet sein, daß sie die Amplitude oder Amplituden so renormiert, daß nach der Renormierung die Amplituden nur noch in ihren relativen Verhältnissen zueinander vorliegen wobei die Summe aller Amplituden nach der Renormierung gleich einer Konstante ist und die Amplituden je paarweise vor der Renormierung im gleichen Verhältnis zueinander stehen wie nach der Renormierung, wobei die Konstante vorzugsweise als die Zahl Eins gewählt wird, jede andere Zahl aber offensichtlich ebenso gut geeignet ist. Somit werden bei der Renormierung die Verhältnisse der Amplituden zueinander gewahrt.

Auch sei angeführt, daß die eingangs erwähnte Differenzierungseinrichtung vorzugsweise Ausgabemittel aufweist, die der Ausgabe der nach der Zeit einfach oder auch mehrfach abgeleiteten Amplitude oder Amplituden eines bestimmten Frequenzbandes aus dem Frequenzspektrum des akustischen Signals bzw. deren Absolutbeträge dienen. Hiermit können dann etwa weitere zusätzliche Baugruppen oder Module eingangsseitig versorgt werden.

Wie bereits erwähnt, kann zur weiteren Verbesserung der Klassifikationsfähigkeit akustischer Signale das neuronale Netzwerk auch Eingangsneuronen aufweisen, die jeweils zum Empfang der Amplitude oder der renormierten Amplitude eines bestimmten Frequenzbandes aus dem Frequenzspektrum des akustischen Signals vorgesehen sind. Dies trägt der Beobachtung Rechnung, daß akustische Signale unter bestimmten Voraussetzungen - wenn auch deutlich schlechter - u.U. auch anhand ihres statischen Frequenzmusters erkannt werden können. Kombiniert man nun eine solche statische Erkennungseinrichtung mit der erfindungsgemäßen Vorrichtung, so läßt sich hierdurch eine weitere Verbesserung der Erkennungsrate erzielen. Auch die erkennbaren statischen Muster können nämlich Spezifika aufweisen, die zu einer Klassifikation und damit auch zu einer Identifikation des akustischen Signals führen oder doch zumindest beitragen können. Somit wird in dieser Ausführungsform das akustische Signal nicht nur nach seiner relativen zeitlichen Energieverschiebung, sondern zudem u.U. auch nach seinem Frequenzspektrum klassifiziert, wobei die vorstehenden Erörterungen über die Signalklassifikation mit neuronalen Netzen für diese zusätzlichen Eingangsgrößen entsprechend gelten.

Ergänzend sei in diesem Zusammenhang ebenfalls erwähnt, daß als weitere infrage kommende Eingangsdaten zur Verbesserung der Klassifikationsleistung auch die höheren Ableitungen des Frequenzspektrums nach der Zeit ergänzend neben dem Spektrum selbst oder auch statt seiner als Eingangsgrößen des neuronalen Netzes Verwendung finden können, welche selbst auch wiederum der vorherigen Renormierung unterliegen können.

In einer bevorzugten Ausführungsform der Vorrichtung zur Geräuscherkennung in akustischen Signalen nach der vorliegenden Erfindung ist weiterhin eine Vorerkennungseinrichtung vorgesehen, die wiederum Mittel vorsieht, die jeweils zum Empfang der Amplitude eines bestimmten Frequenzbandes aus dem Frequenzspektrum des akustischen Signals dienen, sowie Mittel, die jeweils zum Empfang der nach der Zeit abgeleiteten Amplitude eines bestimmten Frequenzbandes aus dem Frequenzspektrum des akustischen Signals oder deren Absolutbetrages dienen, wobei die Vorerkennungseinrichtung zumindest ein Vorerkennungssignal erzeugt, welches das akustische Signal nach den Kategorien Ton, Pfeifton und Kein-Ton klassifiziert, und so weiteren Aufschluß über die Art des akustischen Signals gibt und das neuronale Netz von zumindest einem der Vorerkennungssignale aktiviert wird, wenn das akustische Signal von der Vorerkennungseinrichtung als ein solches der Kategorie Kein-Ton klassifiziert wurde. Eine solche Vorerkennungseinrichtung bedient sich dabei vorzugsweise zu ihrer Versorgung mit den als Eingangsdaten benötigten nach der Zeit abgeleiteten Werten des Frequenzspektrums des zu klassifizierenden akustischen Signals der eingangs erwähnten Differenzierungseinrichtung, die für diese Zwecke vorzugsweise Ausgabemittel aufweist, die die so nach der Zeit abgeleitete Amplitude oder abgeleiteten Amplituden eines bestimmten Frequenzbandes aus dem Frequenzspektrum des akustischen Signals bzw. deren Absolutbeträge an die Vorerkennungseinrichtung ausgeben.

Auch sei an dieser Stelle darauf hingewiesen, daß die Differenzierungseinrichtung selbst etwa im Taktbetrieb arbeiten und die Amplitude oder Amplituden eines bestimmten Frequenzbandes aus dem Frequenzspektrum des akustischen Signals taktweise empfangen kann, wobei die Mittel zur Ableitung der Amplitude oder Amplituden nach der Zeit dabei einen Puffer aufweisen, der jeweils die Amplitude oder Amplituden des vorhergehenden Taktes enthält und hiermit die Ableitung nach der Zeit durch Subtraktion der aktuellen von der vorhergehenden Amplitude oder Amplituden taktweise gebildet wird. Eine solche taktweise mittels einfacher Subtraktion arbeitende Differenzierungseinrichtung stellt dabei eine besonders leicht zu realisierende erfindungsgemäße Variante dar.

Die Vorerkennungseinrichtung selbst bietet den Vorteil der Voraberkennung von Tönen und Pfeiftönen aus dem akustischen Signal, was auch für die weitere Geräuscherkennung insoweit wichtig ist, als daß dies der besseren Identifizierung sogenannter tonhaltiger Geräusche dient. Geräusche sind immer dann tonhaltig i.S. der DIN 45 681 (*Bestimmung der Tonhaltigkeit von Geräuschen und Ermittlung eines Tonzuschlages für die Beurteilung von Geräuschimissionen*), wenn sie einen Ton enthalten, dessen Pegel den Pegel der Geräuschanteile in der Frequenzgruppe um die Tonfrequenz ohne den Ton um weniger als 6 dB unterschreiten. Derartige Geräuschimmissionen sind i.d.R. für den Menschen besonders unangenehm und bedürfen daher u.U. der Beaufschlagung ihres Pegels durch einen Zuschlag, den sogenannten Tonzuschlag, "*der eine Korrekturgröße zum äquivalenten Dauerschallpegel, die bei der Bildung von Beurteilungspegeln zur Berücksichtigung der besonderen Lästigkeit tonhaltiger Geräusche angewandt wird (siehe auch VDI 2058 Blatt 1)*" (so: DIN 45 681, S.3, Pkt. 2.2) ist.

Von der Vorerkennungseinrichtung kann etwa immer dann ein Vorerkennungssignal erzeugt werden, welches das akustische Signal nach der Kategorie Ton klassifiziert, wenn mindestens eine Amplitude eines bestimmten Frequenzbandes aus dem Frequenzspektrum des akustischen Signals oberhalb eines vorgewählten Tonschwellwertes liegt.

Auch kann von der Vorerkennungseinrichtung immer dann ein Vorerkennungssignal erzeugt werden, welches das akustische Signal nach der Kategorie Pfeifton klassifiziert, wenn mindestens eine nach der Zeit abgeleitete Amplitude eines bestimmten Frequenzbandes aus dem Frequenzspektrum des akustischen Signals oder deren Absolutbetrag oberhalb eines vorgewählten Pfeiftonschwellwertes liegt.

Eine besonders bevorzugte Ausführungsform der Vorrichtung zur Geräuscherkennung in akustischen Signalen nach der vorliegenden Erfindung, ist dadurch gekennzeichnet, daß von der Vorerkennungseinrichtung immer dann ein Vorerkennungssignal erzeugt wird, welches das akustische Signal nach der Kategorie Ton klassifiziert, wenn mindestens eine Amplitude eines bestimmten Frequenzbandes aus dem Frequenzspektrum des akustischen Signals oberhalb eines vorgewählten Tonschwellwertes liegt und immer dann ein Vorerkennungssignal erzeugt wird, welches das akustische Signal nach der Kategorie Pfeifton klassifiziert, wenn mindestens eine nach der Zeit abgeleitete Amplitude eines bestimmten Frequenzbandes aus dem Frequenzspektrum des akustischen Signals oder deren Absolutbetrag oberhalb als eines vorgewählten Pfeiftonschwellwertes liegt und immer dann ein Vorerkennungssignal erzeugt wird, welches das akustische Signal nach der Kategorie Kein-Ton klassifiziert, wenn das akustische Signal weder nach der Kategorie Ton noch nach der Kategorie Pfeifton klassifiziert wird.

Als Vorerkennungsvorrichtung kann auch eine Fuzzy-Logic vorgesehen sein, die wiederum Mittel vorsieht, die jeweils zum Empfang der Amplitude eines bestimmten Frequenzbandes aus dem Frequenzspektrum des akustischen Signals dienen, sowie Mittel, die jeweils zum Empfang der nach der Zeit abgeleiteten Amplitude eines bestimmten Frequenzbandes aus dem Frequenzspektrum des akustischen Signals oder deren Absolutbetrages dienen, wobei die so empfangenen Amplituden oder abgeleiteten Amplituden bzw. deren Absolutbeträge jeweils fuzzyfiziert, d.h. entsprechend einer Zugehörigkeitsfunktion auf linguistische Variable abgebildet werden, und die Fuzzy-Logic mittels einer Inferenzmaschine die so fuzzyfizierten Amplituden und/oder nach der Zeit abgeleiteten Amplituden oder deren Absolutbetrag mittels in einer Wissensbasis hinterlegter Regeln zu zumindest einem Vorerkennungssignal inferiert, welches das akustische Signal nach den Kategorien Ton, Pfeifton und Kein-Ton klassifiziert, und so Aufschluß über die Art des akustischen Signals gibt.

Vorzugsweise sind bei der Fuzzy-Logic Mittel vorgesehen, die zum Empfang der maximalen Amplitude und solche die zum Empfang der zweitgrößten Amplitude jeweils aus einer Vielzahl von, zu bestimmten Frequenzbändern gehörigen Amplituden aus dem Frequenzspektrum des akustischen Signals dienen, sowie Mittel zum Empfang der maximalen nach der Zeit abgeleiteten Amplitude oder deren Absolutbetrags aus einer Vielzahl von, zu bestimmten Frequenzbändern gehörigen abgeleiten Amplituden oder deren Absolutbeträge aus dem Frequenzspektrum des akustischen Signals, wobei die so empfangenen Amplituden oder abgeleiteten Amplituden bzw. deren Absolutbeträge jeweils fuzzyfiziert, d.h. entsprechend einer Zugehörigkeitsfunktion auf linguistische Variable abgebildet werden.

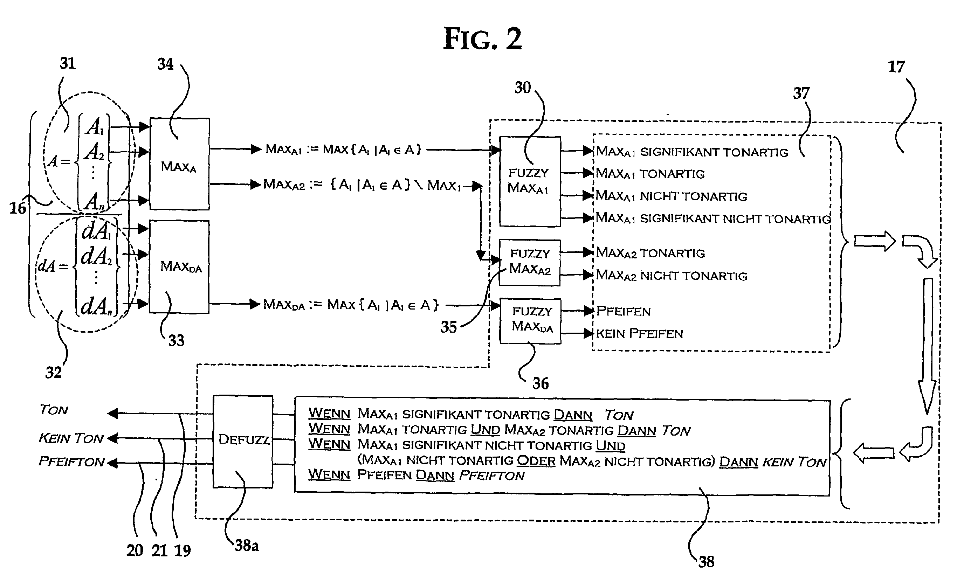

Die vorstehenden erfindungsgemäßen Ausführungsformen einer Vorrichtung zur Geräuscherkennung in akustischen Signalen, die sich einer Fuzzy-Logic als Vorerkennungseinrichtung bedienen, haben sich dabei in Versuchen besonders bewährt. Sie ermöglichten aufgrund der leicht änderbaren Zuordnungsfunktionen der Eingangswerte zu den verwendeten linguistischen Variablen und der gleichfalls leicht änder- und ergänzbaren Regelbasis für die Fuzzy-Logic-Inferenzmaschine eine besonders flexible Anpassung der Vorerkennungseinrichtung auf den jeweiligen Anwendungsfall. Wegen des näheren Verständnisses sei im weiteren auf das zu Fig. 2 besprochene Ausführungsbeispiel verwiesen.

Auch kann die Vorrichtung zur Geräuscherkennung in akustischen Signalen nach der vorliegenden Erfindung im weiteren eine Hintergrundgeräusch-Eliminationseinrichtung aufweisen, die Mittel vorsieht, die jeweils zum Empfang der Amplitude eines bestimmten Frequenzbandes aus dem Frequenzspektrum des akustischen Signals dienen, und Mittel, die jeweils zum Empfang der Hintergrundgeräusch-Amplitude eines bestimmten Frequenzbandes aus dem Frequenzspektrum des zum akustischen Signal gehörigen jeweiligen Hintergrundgeräusches dienen, sowie Mittel, die von der jeweiligen Amplitude eines bestimmten Frequenzbandes aus dem Frequenzspektrum des akustischen Signals die Amplitude des entsprechenden Frequenzbandes aus dem Frequenzspektrum des zum akustischen Signal gehörigen jeweiligen Hintergrundgeräusches zum Abzug bringen, und weiterhin Ausgabemittel, die die vom Hintergrundgeräusch solchermaßen befreite Amplitude oder befreiten Amplituden eines bestimmten Frequenzbandes aus dem Frequenzspektrum des akustischen Signals ausgeben.

Dabei kann die Hintergrundgeräusch-Eliminationseinrichtung im Taktbetrieb arbeiten, wobei die die jeweiligen einander entsprechenden Amplituden taktweise empfängt und taktweise voneinander abzieht.

Vorzugsweise empfängt die Hintergrundgeräusch-Eliminationseinrichtung die zum Hintergrundgeräusch gehörigen Signale dabei von einer Vorrichtung zur Hintergrundgeräuschermittlung. Dabei verbessert diese die Qualität der Arbeit der erfindungsgemäßen Vorrichtung zur Geräuscherkennung in akustischen Signalen noch einmal erheblich, da sie das beinahe jeder realistisch gewählten akustischen Umgebung zueigene Hintergrundrauschen ermittelt, um es dann von der Hintergrundgeräusch-Eliminationseinrichtung ausblenden zu lassen, womit die Vorrichtung zur Hintergrundgeräuschermittlung zur Lösung des Problems der automatischen Geräuscherkennung in akustischen Signalen in erheblichem Maße beiträgt.

Die Hintergrundgeräusch-Eliminationseinrichtung ist dabei auf eine gute Ermittlung des Hintergrundgeräusches angewiesen, um diese für die Geräuscherkennung unangenehme Störung möglichst wirkungsvoll aus dem akustischen Signal zu entfernen. Somit ist es Aufgabe der hierzu dienlichen Vorrichtung zur Hintergrundgeräuschermittlung eine möglichst leistungsfähige Hintergrundgeräuschermittlung zur Verfügung zu stellen.

Dies wird durch eine Vorrichtung zur Hintergrundgeräuschermittlung in akustischen Signalen erreicht, die jeweils die Amplitude eines bestimmten Frequenzbandes aus dem Frequenzspektrum des zum akustischen Signal gehörigen jeweiligen Hintergrundgeräusches ermittelt, wobei sie Mittel aufweist, die jeweils zum Empfang der jeweils aktuell gemessenen Amplitude eines bestimmten Frequenzbandes aus dem Frequenzspektrum des akustischen Signals dienen, und die Hintergrundgeräuschermittlung ausgehend von einer zu Betriebsbeginn hoch gewählten fiktiven Start-Hintergrundgeräusch-Amplitude derart geschieht, daß die jeweilige Hintergrundgeräusch-Amplitude jeweils nach einer von Zeit zu Zeit erfolgenden Messung der aktuell herrschenden Amplitude des zugehörigen Frequenzbandes immer dann auf den letzten Meßwert korrigiert wird, wenn dieser Meßwert kleiner als der Wert der bis zu diesem Zeitpunkt solchermaßen ermittelten Hintergrundgeräusch-Amplitude, vorzugsweise zuzüglich eines bestimmten konstanten Aufschlages, war und weiterhin Ausgabemittel vorgesehen sind, die die ermittelten Hintergrundgeräusch-Amplituden eines bestimmten Frequenzbandes aus dem Frequenzspektrum des akustischen Signals ausgeben.

Vorzugsweise erhöht die Vorrichtung hierbei vor jeder von Zeit zu Zeit erfolgenden Messung der aktuell herrschenden Amplitude die jeweilige bis zu diesem Zeitpunkt ermittelte Hintergrundgeräusch-Amplitude um einen bestimmten festen Zuschlag.

In einer bevorzugten Ausführungsform arbeitet die Hintergrundgeräuschermittlungseinrichtung im Taktbetrieb und gibt die jeweilige Hintergrundgeräusch-Amplitude oder die jeweiligen Hintergrundgeräusch-Amplituden taktweise aus.

Alle vorstehenden Ausführungsformen einer Hintergrundgeräuschermittlungseinrichtung vermögen es schnell und zuverlässig das Hintergrundgeräusch des jeweiligen akustischen Signals zu ermitteln. Die Vorrichtung beginnt dabei für den Fall, daß sie tatsächlich Pegel und nicht nur Intensitäten empfängt die Ermittlung des Hintergrundgeräusches ausgehend von der Annahme eines recht hohen fiktiven Startwertes von vorzugsweise 200dB, der dann schnell auf die dann tatsächlich gemessenen minimalen Pegel des empfangenen akustischen Signals absinkt. Bei der Ermittlung des bis zu einem bestimmten Zeitpunkt gemessenen minimalen Hintergrundgeräusches ist es u.U. hilfreich den bis dato gemessenen minimalen Pegel (bzw. allgemeiner: Amplitude) nur dann durch einen neuen Minimalpegel (bzw. allgemeiner: Minimalamplitude) als neuen Hintergrundgeräuschpegels (bzw. allgemeiner: Hintergrundgeräuschamplitude) zu ersetzen, wenn der neue Minimalpegel (bzw. allgemeiner: Minimalamplitude) den bis dahin gültigen Hintergrundgeräuschpegel (bzw. allgemeiner: Hintergrundgeräuschamplitude) zumindest um ein gewisses Maß (etwa eine Konstante), vorzugsweise um 0,5 dB, unterschreitet, um kurzfristige kleinere Unterschreitungen unberücksichtigt zu lassen.

Weiterhin ist es sinnvoll die Vorrichtung so auzugestalten, daß die jeweils aktuell ermittelte Hintergrundgeräusch-Amplitude von der Vorrichtung von Zeit zu Zeit um ein bestimmtes Maß erhöht wird, um die Vorrichtung so in die Lage zu versetzen auch ein sich wieder erhöhendes Hintergrundgeräusch zu registrieren. Der von Zeit zu Zeit erfolgende Zuschlag sorgt nämlich dafür, daß der festgestellte Hintergrundgeräuschpegel nach und nach aus einem einmal erreichten Tal gleichsam wieder herausklettert, sofern es im Hintergrund lauter geworden ist.

Die Hintergrundgeräuschermittlungsvorrichtung arbeitet vorzugsweise parallel zu den anderen Komponenten der Geräuscherkennungsvorrichtung. Dies bedeutet, daß die Geräuscherkennungsvorrichtung erst nach einer gewissen Anlaufphase von der Hintergrundgeräuschermittlungsvorrichtung mit korrekten Daten über das Hintergrundgeräusch versorgt wird. Erfahrungsgemäß braucht dies etwa 5 Minuten Zeit. Danach kann sie weiter parallel arbeiten und die Geräuscherkennung derweil immer mit jeweils aktualisierten Daten über das anstehende Hintergrundgeräusch versorgen.

In einer weiteren Ausführungsform der erfindungsgemäßen Vorrichtung zur Geräuscherkennung in akustischen Signalen ist eine Spektrumanalyse-Einrichtung vorgesehen, die wiederum Mittel zum Empfang einer einzigen über die Zeit verlaufenden Amplitude eines akustischen Signals vorsieht und weitere Mittel aufweist, um diese einzige über die Zeit verlaufenden Amplitude eines akustischen Signals in jeweils über die Zeit verlaufende Amplituden bestimmter Frequenzbänder aus dem Frequenzspektrum des akustischen Signals zu zerlegen und auszugeben. Vorzugsweise wird hierzu eine Fast-Fourier-Transformationsneinrichtung (FFT-Einrichtung) verwendet, die eine solche Zerlegung besonders effektiv ermöglicht. Die Zerlegungseinrichtung dient dabei der Zerlegung des akustischen Signals in eine bestimmte Anzahl von Frequenzbändern, die, wie bereits eingangs erwähnt wurde, ihrer Anzahl und Frequenzbreite nach auf die jeweiligen Verhältnisse des zu identifizierenden akustischen Signals abzustimmen sind.

Auch kann weiterhin ein Filter, vorzugsweise einen Bandpass-Filter in der erfindungsgemäßen Geräuscherkennungsvorrichtung verwendet werden, der Mittel zum Empfang einer einzigen über die Zeit verlaufenden Amplitude eines akustischen Signals vorsieht und diese einzige über die Zeit verlaufende Amplitude nur insoweit wieder ausgibt, als daß sie dem akustischen Signal im wesentlichen nur innerhalb eines bestimmten Frequenzbandes vorzugsweise in einem Bereich von etwa 16 Hz bis 20 KHz, besonders bevorzugt in einem Bereich von etwa 16 Hz bis 16 KHz entspricht. Hierdurch ist es beispielsweise möglich die Auswertung des akustischen Signals auf den hörbaren Bereich zu beschränken.

Auch kann ein Filter eingesetzt werden, der zusätzlich eine dezibel-Bewertung, vorzugsweise eine A-Bewertung, der empfangenen Amplitude durchführt und die so gewichtete Amplitude wieder ausgibt. Solche Filter sind als sogenannte A-Filter im Handel erhältlich und tragen durch ihre A-Bewertung dem unterschiedlich empfindlichen menschlichen Hörempfinden bei verschiedenen Frequenzen Rechnung.

Eine weitere bevorzugte Ausführungsform einer Vorrichtung zur Geräuscherkennung in akustischen Signalen ist dadurch gekennzeichnet, daß sie weiterhin eine Umklassifizierungsvorrichtung aufweist, welche Mittel zum Empfang des Klassifikationssignals und/oder des Vorerkennungssignals aufweist, wobei die Umklassifizierungsvorrichtung zumindest ein Geräuschklassensignal hieraus erzeugt und ausgibt, welches das akustische Signal einer oder mehreren Geräuschkategorien zuordnet. Eine solche Umklassifizeirungsvorrichtung ist immer dann von Vorteil, wenn es mehrere klassifizierte Signale gibt, die ihrerseits wieder zu Gruppen zusammengefasst werden sollen, etwa nach ihrer Herkunft, ohne aber, daß sich diese Gruppen von vorneherein nach akustischen Kriterien klassifizieren ließen.

So sind etwa im Rahmen von Lärmgutachten Gruppen akustischer Signale aufgrund jeweils einschlägiger gesetzlicher Regelungen wie folgt von Belang:

- Straßen- und Schienenlärm aufgrund der Regelungen in der 16. Verordnung zum Bundesimmissionsschutzgesetz

- Fluglärm aufgrund des Fluglärmschutzgesetzes

- Gewerbelärm aufgrund der TA Lärm

- Sportlärm aufgrund der Regelungen in der 18. Verordnung zum Bundesimmissionsschutzgesetz

- Freizeitlärm aufgrund länderrechtlicher Regelungen, (vgl. etwa die Muster Verwaltungs Verordnung zur TA Lärm)

- Geräusche aus der Natur, die Fremdgeräusche i.S. der vorstehend angeführten Regelungen darstellen

Hier müssen somit verschiedene jeweils einzeln klassifizierte Geräusche den vorstehenden Kategorien zugeordnet werden, die technisch allein aufgrund ihrer akustischen Struktur nicht als solche klassifizierbar sind. Beispielsweise handelt es sich bei dem von Automobilen, Motorrädern oder Schienenfahrzeugen ausgehenden Schallimmissionen allesamt um Straßen- und Schienengeräusche, sie weisen jedoch jeweils ein eigenes akustisches Muster auf, welches jedes für sich gesehen erkannt werden kann. In ihrer Gesamtheit weisen diese Kategorien jedoch i.d.R. keine ausreichenden akustischen Gemeinsamkeiten auf, um als Straßen- und Schienenlärm direkt identifiziert werden zu können. Dies ist jedoch mittels der erfindungsgemäßen Umklassifizierungseinrichtung möglich, die es erlaubt einzeln klassifizierte Signale auf neue Klassen, also insbesondere auch Obergruppen abzubilden und so das gewünschte Klassifikationsergebnis zu erhalten.

Eine weitere besonders bevorzugte Ausführungsform einer Vorrichtung zur Geräuscherkennung in akustischen Signalen nach der vorliegenden Erfindung ist dadurch gekennzeichnet, daß die Vorrichtung weiterhin eine Markierungsvorrichtung aufweist, die die einzige über die Zeit verlaufende, womöglich frequenz-gefilterte und/oder A-bewertete Amplitude entsprechend dem zeitlich jeweils zugehörigen Geräuschklassensignal und/oder Vorerkennungssignal, vorzugsweise mittels einer dem jeweiligen Signal zugehörigen Farbe in einer graphischen Darstellung des zeitlichen Verlaufes der Amplitude markiert, sowie Mittel zur Ausgabe des so markierten Signals vorgesehen sind. Hierdurch kann der Signalverlauf entsprechend der Art des akustischen Signals z.B. in einem Kurvenschrieb über die Zeit farbig kenntlich gemacht werden. Der Farbe der Kurve kann dann entnommen werden, welchen Ursprungs das Signal an den so markierten (gefärbten) Punkten ist, was für den Betrachter höchst anschaulich und informativ ist.

Vorzugsweise weist die erfindungsgemäße Vorrichtung zur Geräuscherkennung in akustischen Signalen auch eine Impulserkennungsvorrichtung auf, welche Mittel zum Empfang der einzigen über die Zeit verlaufenden, womöglich frequenz-gefilterten und/oder A-bewerteten Amplitude vorsieht und dieses Signal auf einen Impuls hin überwacht, wobei die Impulserkennungsvorrichtung zumindest ein Impulserkennungssignal erzeugt, solange die einzige über die Zeit verlaufende und womöglich frequenz-gefilterte und/oder A-bewertete Amplitude einen Impuls aufweist, wobei vorzugsweise die Überschreitung eines Grenzwertes durch die zeitliche Ableitung oder ihren Absolutbetrag der einzigen über die Zeit verlaufenden, womöglich frequenz-gefilterten und/oder A-bewerteten Amplitude zur Impulserkennung benutzt wird. Dabei kann im Falle der Verwendung einer Markierungsvorrichtung die einzige über die Zeit verlaufende, womöglich frequenz-gefilterte und/oder A-bewertete Amplitude entsprechend dem zeitlich jeweils zugehörigen Impulserkennungssignal mit Vorrang gegenüber dem jeweils zugehörigen Geräuschklassensignal oder Vorerkennungssignal, vorzugsweise mittels einer dem Impulserkennungssignal zugehörigen Farbe in einer graphischen Darstellung des zeitlichen Verlaufes der Amplitude markiert werden. Die Impulserkennung dient der Identifikation impulsartiger Verläufe des akustischen Signals, die von akustischen Signalen anderer Art getrennt werden und auch als Impulssignale erkannt werden sollen.

Auch kann die erfindungsgemäße Vorrichtung zur Geräuscherkennung in akustischen Signalen eine Signalanalysevorrichtung aufweisen, welche wiederum Mittel zum Empfang der markierten einzigen über die Zeit verlaufenden, womöglich frequenz-gefilterten und/oder A-bewerteten Amplitude aufweist, wobei die Signalanalysevorrichtung die mit dem Geräuschklassenerkennungssignal oder Impulserkennungssignal markierte Amplitude weiter auf zu erkennende Muster analysiert. Dabei kann die Signalanalysevorrichtung insbesondere als Fuzzy-Logic, als neuronales Netz oder als eine Kombination hieraus realisiert sein. Eine solche zusätzliche Analysevorrichtung erlaubt es auch komplexere Verläufe akustischer Signale über die Zeit hinweg zu identifizieren, wie etwa ein periodisch auftretendes Geräusch.

Allgemein ist zu den vorgenannten erfindungsgemäßen Vorrichtungen noch anzumerken, daß sie sich selbstverständlich auch besonders gut auf einem entsprechend ausgestatteten Computer durch eine geeignete meß- und regelungstechnische Software realisieren lassen. In diesem Falle werden die einzelnen Vorrichtungen dann auf einer programmgesteuerten Maschine als technisches Verfahren, gesteuert durch das jeweilige Programm realisiert.

Die erfindungsgemäße Vorrichtung zur Geräuscherkennung bietet in jedem Falle eine Vielzahl von Vorteilen in ihrer Anwendung auf dem Gebiet der technischen Akustik. Sie ist überall da einzusetzen, wo es nicht nur auf das Ausmaß einer Schallimmission, sondern auch auf die Feststellung ihrer Ursachen ankommt. Insbesondere ermöglicht sie aber auch eine Zuordnung des Ausmaßes einer Schallimmission zu der ihr zugehörigen Quelle. In diesem Zusammenhang soll einem besonders wichtigen Anwendungsgebiet der vorliegenden Erfindung nachfolgend die besondere Aufmerksamkeit gelten:

Den Betreibern von Windkraftanlagen weht in jüngster Vergangenheit nicht nur der von ihnen gewünschte Wind in ihre Anlagen sondern auch der der zunehmenden Ablehnung der Anlieger solcher Anlagen ins Gesicht, da sich diese von den von diesen Anlagen ausgehenden Schallimmissionen belästigt fühlen. Entsprechend wurden die Verwaltungsvorschriften zum Bundesimmissionsschutzgesetz (vgl. § 48 BImSchG) in der Sechsten allgemeinen Verwaltungsvorschrift hierzu (Technische Anleitung zum Schutz gegen Lärm - TA Lärm, GMBl 1998, 503ff.) so gefaßt, daß auch den schutzwürdigen Interessen der Anlieger solcher Anlagen Rechnung getragen wird. Nach Pkt. 6.8 der vorgenannten TA Lärm wird dabei der, die Betriebsdauer einer solchen Anlage maßgeblich beeinflussende Beurteilungspegel entsprechend ihrem Anhang: Ermittlung der Geräuschimmissionen zur TA Lärm (vgl. GMBl 1998, 510ff.) gebildet, wobei nach dem dortigen Pkt. A2 eine Ermittlung durch Prognose zugelassen ist. Diese Verfahrensweise (Prognose) stellt heute nach dem Stand der Technik den Regelfall dar, da für ein Meßverfahren, das die TA Lärm nach Pkt. 6.9 mit einem pauschalen Abschlag für den Beurteilungspegel von 3dB(A) belohnt, die technischen Voraussetzungen meist fehlen.

Hierzu wäre es nämlich erforderlich, den von den Schallquellen der Windkraftanlage, also insbesondere den Windrädern ausgehenden Schall von den Hintergrund- und Störgeräuschen zu trennen. Als wesentliches Störgeräusch ist dabei vor allem das Geräusch des auf das Meßmikrofon auftreffenden Windes zu nennen, welches ein ganz beachtliches Ausmaß annehmen kann. Der Wind verursacht hier bei geringeren Geschwindigkeiten ein tieferfrequentes oft tonartiges Geräusch und im Falle hoher Windgeschwindigkeiten ein hochfrequentes störendes Pfeifen. Will man nun statt eines Prognoseverfahrens ein Meßverfahren zur Überwachung der Schallimmissionen einer Windkraftanlage einsetzen und so in den Genuß des pauschalen 3dB(A) Abschlages vom Beurteilungspegel kommen, so muß man sicherstellen nicht die Windgeräusche zu messen, sondern die Schallimmissionen der Windkraftanlage. Somit müssen die Windgeräusche also für die Messung ausgeblendet werden.

Nach dem Stand der Technik existieren hierzu zwei Möglichkeiten:

Die erste besteht darin, ähnlich wie es bei Rundfunk- und Fernsehübertragungen im Außenbereich üblich ist, einen sogenannten Windball aus feinporigem Schaumstoff über das Mikrofon zu stülpen, um so das Geräusch des auf das Mikro auftreffenden Windes zu dämpfen. Diese Methode ist bis zu einer gewissen Windgeschwindigkeit (etwa 3 Meter pro Sekunde) auch wirksam, versagt jedoch leider bei höheren Geschwindigkeiten, wo die Störgeräusche dann besonders unangenehm werden.

Alternativ oder auch zusätzlich kann der Wind mittels eines Geräuschpausenverfahrens weggeblendet werden, bei dem das akustische Signal vom Mikrofon immer nur dann für die Messung berücksichtigt wird, wenn die gleichfalls gemessene Windgeschwindigkeit unterhalb eines bestimmten Wertes liegt. Dieses Verfahren ist jedoch nur für böigen Wind geeignet, der die Höchstmeßgeschwindigkeit, bei der die Vorrichtung zur Messung noch brauchbare Meßergebnisse liefert zumindest von Zeit zu Zeit unterschreitet. Bei konstantem Wind höherer Geschwindigkeit, also schon ab 3 Meter pro Sekunde, wo der Windball schon nichts mehr ausrichtet, versagt auch dieses Verfahren.

Da sich nun für die Überwachung einer Windkraftanlage, die ja gerade viel und möglichst konstanten Wind ab einer gewissen Geschwindigkeit zu ihrem wirtschaftlichen Betrieb voraussetzt die voranstehenden Meßverfahren als ungeeignet erwiesen haben, bedarf es hier einer neuen Lösung, nämlich einer Meßvorrichtung, die auch noch bei höheren konstanten Windgeschwindigkeiten in der Lage ist, den von der Windkraftanlage ausgehenden Schallpegel unter Ausblendung der Windauftreffgeräusche zu messen.

Dies wird erreicht durch eine Vorrichtung zur Messung des Schallpegels von Windkraftanlagen, die dadurch gekennzeichnet ist, daß sie eine Vorrichtung zur Geräuscherkennung in akustischen Signalen aufweist, welche ein der Umgebung von Windkraftanlagen entstammendes akustisches Signal auswertet und so klassifiziert, daß die Geräuscherkennungsvorrichtung über die Art des der Umgebung von Windkraftanlagen entstammenden akustischen Signals zumindest insoweit Aufschluß gibt, als daß das akustische Signal zumindest nach den Kategorien Windkraftanlagen-Schall einerseits und Kein-Windkraftanlagen-Schall andererseits klassifiziert wird, wobei das akustische Signal nur insoweit zur Messung des Schallpegels berücksichtigt wird, als es von der Vorrichtung zur Geräuscherkennung in akustischen Signalen als Windkraftanlagen-Schall klassifiziert wird.

Bevorzugterweise ist die erfindungsgemäße Vorrichtung zur Messung des Schallpegels von Windkraftanlagen dabei dadurch gekennzeichnet, daß sie eine Vorrichtung zur Geräuscherkennung in akustischen Signalen nach der hier vorliegenden Erfindung aufweist, welche ein der Umgebung von Windkraftanlagen entstammendes akustisches Signal auswertet und deren Ausgangsneuronen zumindest ein Klassifikations-Signal erzeugen, welches oder welche über die Art des der Umgebung von Windkraftanlagen entstammenden akustischen Signals zumindest insoweit Aufschluß gibt oder geben, als daß das akustische Signal zumindest nach den Kategorien Windkraftanlagen-Schall einerseits und Kein-Windkraftanlagen-Schall andererseits klassifiziert wird, wobei das akustische Signal nur insoweit zur Messung des Schallpegels berücksichtigt wird, als es von der Vorrichtung zur Geräuscherkennung in akustischen Signalen als Windkraftanlagen-Schall klassifiziert wird.

In einer weiteren bevorzugten Ausführungsform nach der vorliegenden Erfindung klassifiziert dabei die Vorrichtung zur Messung des Schallpegels von Windkraftanlagen die vom Wind herrührenden Geräusche auch ihrer näheren Art nach als Wind-Schall-Tieffrequent und Wind-Schall-Hochfrequent.

Bei Einsatz einer Vorerkennungseinrichtung in der erfindungsgemäßen Geräuscherkennungseinrichtung kann diese das in der Umgebung der Windkraftanlage aufgenommene akustische Signal auch vorzugsweise bereits nach den Kategorien Ton, vorzugsweise Wind-Ton, Pfeifton, vorzugsweise Wind-Pfeifton, und Kein-Ton klassifizieren.

Ebenso ist es natürlich möglich zur Entscheidung, ob das akustische Signal zur Messung berücksichtigt werden soll, das Geräuschklassensignal einer womöglich verwendeten Umklassifzierungsvorrichtung zu benutzen.

Das tatsächlich dann gemessene und berücksichtigte Signal wird vorzugsweise mittels einer Mittelungsvorrichtung gemittelt, vorzugsweise langfristig gemittelt, wobei diese Mittelung besonders bevorzugterweise gleitend erfolgt.

Der so gebildete Mittelwert kann dann von einer Überwachungseinrichtung auf die Überschreitung eines Grenzwertes hin überwacht werden.

Mit der vorstehend beschriebenen Vorrichtung zur Messung des Schallpegels von Windkraftanlagen kann damit eine TA Lärm konforme Überwachungsmessung erfolgen, die nicht von Windstörgeräuschen beeinträchtigt wird.

Dies hilft, ohne den Willfährnissen einer im Einzelfall womöglich unzutreffenden Prognoserechnung ausgeliefert zu sein eine Windkraftanlage wirtschaftlich betreiben zu können.

Vorteilhafterweise kann der Beurteilungspegel für eine solche Anlage zudem um einen pauschalen Abschlag von 3 dB(A) vermindert werden, was ihre Stillstandzeiten weiter vermindern hilft und so gleichfalls zu ihrer Wirtschaftlichkeit beiträgt.

Weiterhin ermöglicht die vorliegende Erfindung durch die Bereitstellung ihrer Vorrichtungen aber auch noch weitere Verfahren, die dem besseren Betrieb von Windkraftanalgen dienen. So ist es beispielsweise wünschenswert den Schallpegel am Ort der Belästigung, üblicherweise also an bebauten Orten zu erfassen, um so eine exakte Aussage über die dort tatsächlich auftretende Belästigung machen zu können.

Dies könnte man dadurch erreichen, daß man an all diesen Orten Meßeinrichtungen nach der vorliegenden Erfindung aufstellt und hiermit den dort auftretenden Pegel mißt. Dies scheitert jedoch i.d.R. an den hierdurch verursachten hohen Kosten für die Vielzahl der dann notwendigen Meßstationen.

Unter Berücksichtigung des Standes der Technik, etwa der VDI 2714 (Schallausbreitung im Freien) und auch der DE 197 40 783 A1, EP 0 831 310 A2 (jeweils Verfahren und Vorrichtungen zur Bestimmung meteorologischer Zusatzdämpfungen der Schallausbreitung) ist es jedoch möglich unter Verwendung der hier vorgestellten erfindungsgemäßen Meßeinrichtungen an nur einem Ort in der Umgebung zu messen und dennoch für alle anderen Orte den Schallpegel exakt zu bestimmen.

Dies geschieht durch Verfahren zur Bestimmung des von Schallquellen einer Windkraftanlage ausgehenden Schallpegels an einem frei wählbaren ersten Ort (Bestimmungsort) mittels Messung des Schallpegels an einem zweiten Ort (Meßort) mit einer Vorrichtung zur Messung des Schallpegels von Windkraftanlagen nach der vorliegenden Erfindung, wobei der Abstand zwischen der jeweiligen Schallquelle und dem Meßort, der Abstand zwischen der jeweiligen Schallquelle und dem Bestimmungsort, die Höhe der jeweiligen Schallquelle, die Höhe des Meßorts, die Höhe des Bestimmungsortes, die Windgeschwindigkeit, die Windrichtung, die Luftfeuchte, die Temperatur, der Winkel zwischen der Windrichtung und der direkten Verbindungsstrecke von der jeweiligen Schallquelle zum Meßort, der Winkel zwischen der Windrichtung und der direkten Verbindungsstrecke von der jeweiligen Schallquelle zum Bestimmungsort, der Stabilitätsfaktor und der meteorologische Temperaturgradient bestimmt werden und hieraus dann der Schallpegel am Bestimmungsort bestimmt wird.

Hinsichtlich dieses Verfahrens bedürfen die neben den allgemein bekannten Größen auftretenden Werte Stabilitätsfaktor und der meteorologische Temperaturgradient (auch Temperaturfaktor genannt) der Erläuterung:

Der Stabilitätsfaktor auch mit dem Buchstaben m bezeichnet, ist eine Konstante, die von der atmosphärischen Stabilität abhängt. Nach TA Luft nimmt sie die folgenden Werte an:

**Tab. 1 : Stabilitätsklassen nach TA Luft und der Stabilitätsfaktor m**

| m | Stabilitätsklasse | |
|---|---|---|
| 0.41 | I | (sehr stabil) |
| 0.37 | II | (stabil) |
| 0.28 | III.1 | (neutral) |
| 0.22 | III.2 | (neutral) |

(fortgesetzt)

| m | Stabilitätsklasse | |
|---|---|---|
| 0.20 | IV | (labil) |
| 0.09 | V | (sehr labil) |

Die Häufigkeit, in der die Windrichtung und Windgeschwindigkeit in den 6 Stabilitätsklassen auftreten, stehen für ein Raster von 30 x 30 km für Deutschland beim Deutschen Wetterdienst abrufbar zur Verfügung. Ähnliche Modelle stehen in ganz Europa, so in Frankreich mit den Pasquill-Klassen oder in Großbrittanien mit den sogenannten Turner Klassen zur Verfügung. Das hier vorliegende Verfahren ist somit in seiner Anwendung nicht auf Deutschland beschränkt, sondern kann überall dort, wo ein System ähnlich der TA Luft erstellt ist verwendet werden. Dies ist für Europa zur Zeit bereits gegeben. Die Stabilitätsklassen I und II beschreiben stabile Wetterlagen mit Bodeninversionen, die Klassen IV und V labile Wetterlagen mit erwärmten Boden, d.h. bei Sonneneinstrahlung. Die Klassen III.1 und III.2 beschreiben den Übergang zwischen stabilen und labilen Wetterlagen.

Nach einer Veröffentlichung von G.Manier, "Ausbreitungsklassen und Temperaturgradienten", Meteorologische Rundschau 28, 6-11 (März 75) zur TA Luft kann zusätzlich anhand der Stabilitätsklasse der Temperaturgradient (bezeichnet mit dtm) angegeben werden, der in der Regel als Temperaturänderung zwischen 0 und 100 m angegeben wird und der der folgenden Tabelle entnommen werden kann :

**Tab. 2: Stabilitätsklassen nach TA Luft und der Temperaturgradient dtm**

| dtm | Stabilitätsklasse | |
|---|---|---|
| 1.07 | I | (sehr stabil) |
| 0.47 | II | (stabil) |
| 0 | III.1 | (neutral) |
| -1.1 | III.2 | (neutral) |
| -1.45 | IV | (labil) |
| -2.76 | V | (sehr labil) |

Betreffend der weiteren Einzelheiten, die eine Bestimmung des Schallpegels in einer bestimmten Entfernung von einer Schallquelle insbesondere unter Berücksichtigung der meteorologischen Gegebenheiten ermöglichen sei der Fachmann zum einen auf die VDI 2714 und zum anderen auf die DE 197 40 783 A1 und die EP 0 831 310 A2 (jeweils Verfahren und Vorrichtungen zur Bestimmung meteorologischer Zusatzdämpfungen der Schallausbreitung) verwiesen.

Die erfindungsgemäßen Vorrichtungen zur Messung des Schallpegels von Windkraftanlagen ermöglichen es zunächst den Schallpegel der jeweils betrachteten Schallquelle ohne Stör- und Hintergrundgeräusche am Meßort zu bestimmen. Unter Berücksichtigung der zuvor bestimmten geometrischen und meteorologischen Gegebenheiten kann dann beispielsweise mittels der zuvor erwähnten Verfahren nach VDI 2714 und/oder DE 197 40 783 A1 bzw. EP 0 831 310 A2 auf den von der Schallquelle ausgehenden Schallpegel geschlossen werden. Damit ist es sodann möglich (wiederum beispielsweise mittels der zuvor erwähnten Verfahren nach VDI 2714 und/oder DE 197 40 783 A1 bzw. EP 0 831 310 A2) den Schallpegel am Bestimmungsort zu bestimmen, ohne daß es dort einer eigenen Messung bedarf.

Auch ermöglicht die vorliegende Erfindung ein Verfahren zur Prognose des von einer Windkraftanlage herrührenden gemittelten, vorzugsweise langfristig gemittelten Schallpegels an einem frei wählbaren Prognose-Ort während eines Prognosezeitraumes, wobei dies auf der Grundlage einer Messung des Schallpegels an einem zweiten Ort (Meßort) mit einer Vorrichtung zur Messung des Schallpegels von Windkraftanlagen nach der vorliegenden Erfindung und einem Prognosemodell mit Annahmen über die Entwicklung von Windgeschwindigkeit, Windrichtung, Luftfeuchte, Temperatur, Stabilitätsfaktor und meteorologischen Temperaturgradienten während des Prognosezeitraumes geschieht, indem über den Prognosezeitraum hinweg der zeitliche Verlauf des am Prognose-Ort zu erwartenden gemittelten, vorzugsweise langfristig gemittelten Schallpegels nach dem vorstehend beschriebenen Verfahren ermittelt wird, wobei die dortigen zu bestimmenden Größen für Windgeschwindigkeit, Windrichtung, Luftfeuchte, Temperatur, Stabilitätsfaktor und meteorologischen Temperaturgradienten nicht bestimmt, sondern stattdessen dem Prognosemodell für den Prognosezeitraum entnommen werden.

Ein solches Prognoseverfahren wiederum ermöglicht ein Verfahren zur Optimierung des Betriebes einer Windkraftanlage, wobei für einen oder mehrere frei wählbare Orte (Prognose-Orte) eine oder mehrere Annahmen über Betriebszeiträume der einzelnen Schallquellen der Windkraftanlage (Windräder) während des Prognosezeitraumes gemacht werden und basierend hierauf die jeweils zu erwartende gemittelte, vorzugsweise langfristig gemittelte Entwicklung des Schallpegels an den Prognose-Orten nach dem vorstehend beschriebenen Verfahren prognostiziert werden, und dann schließlich die Betriebszeiträume der einzelnen Schallquellen der Windkraftanlage (Windräder) für den tatsächlichen Betrieb während des Prognosezeitraumes festgelegt werden, welche bei größtmöglicher Energieproduktion durch die Windkraftanlage noch unterhalb eines nicht zu überschreitenden Grenzwertes für den gemittelten, vorzugsweise langfristig gemittelten Schallpegels an den jeweiligen Prognose-Orten liegen.

Hierdurch kann der Betrieb einer Windkraftanlage unter wirtschaftlichen Gesichtspunkten weiter optimiert werden, indem die Stillstandzeiten der Anlage oder einzelner Windräder dieser auf ein Minimum optimiert werden, ohne dabei die schutzwürdigen Interessen der Anwohner solcher Anlagen zu tangieren.

Auch ermöglicht die vorliegende Erfindung die Lärmüberwachung bestimmter Gebiete, in denen Geräuschquellen befindlich sind (z.B. Gewerbelärmgebiete) derart, daß der Lärm im in Frage kommenden Immissionsbereich (z.B. im Bereich angrenzender Wohnbebauung) identifiziert wird und die so gemessenen Geräusche anhand parallel hierzu erfolgender Emissionsmessungen in dem Gebiet, in dem der Lärm erzeugt wird, den entsprechenden Verursachern zugeordnet wird. Die genannten Verfahren und Vorrichtungen erlauben dabei eine ausreichend sichere Trennung der zu identifizierenden Geräusche von sonstigen Geräuschen, etwa denen des öffentlichen Straßenverkehrs.

Hierzu ist eine zentrale Auswerteinheit vorgesehen, die, vorzugsweise online, mit den Emissions- und Immissions(außen)meßstellen verbunden ist.

Werden nun Geräusche identifiziert, deren Pegelhöhe aufgrund der jeweiligen vorherrschenden Ausbreitungsbedingungen erwarten läßt, daß es zu einer Überschreitung des Immissionsrichtwertes kommen kann - oder ist dieser gar bereits eingetreten -, werden automatisch entsprechende Alarmmeldungen an den Lärmverursacher abgegeben, die vorzugsweise die folgenden definierten Hinweise oder Teile davon enthalten:

- Wahrscheinlichste Geräuschquelle

- Position der Quelle

- Pegelhöhe der Schallimmission

- Datum und Uhrzeit

- einen Alarmtext

Die zu alarmierenden Stellen werden dabei vorzugsweise von den jeweiligen Betreibern der Lärmquellen vorgegeben. Sie sollten dabei jederzeit erreichbar sein. Nach Eingang einer Meldung können dann Gegenmaßnahmen, etwa organisatorische oder technische Maßnahmen getroffen werden, um eine Lärmminderung zu erreichen.

Vorzugsweise erscheinen die Alarmmeldungen in einer Zentrale, etwa bei einem Schichtleiter. Sie können aber auch per Telefax oder e-mail abgesetzt werden oder auch unmittelbar zur Einwirkung auf Steuerungen oder Regelungen, wie etwa zur Schaltung von Licht- oder Signalzeichen verwendet werden, die eine Lärmminderung ermöglichen.

Eine solche Lärmüberwachung (oder lärmmindernde Beeinflussung) eignet sich vorzugsweise zur Überwachung größerer Gewerbegebiete mit einer Vielzahl von gewerblichen Geräuschquellen (Lärmquellen), wobei hier die Überwachung von Hafenanlagen mit den Umschlaganlagen als Lärmquellen ein besonders bevorzugtes Einsatzgebiet ist.

Im folgenden werden nicht einschränkend zu verstehende Ausführungsbeispiele anhand der Zeichnung besprochen. In dieser zeigt:

Fig. 1    eine erfindungsgemäße Vorrichtung zur Geräuscherkennung im Blockschaltbild,

Fig. 2    eine Vorerkennungseinrichtung als Fuzzy-Logic ausgeführt gleichfalls im Blockschaltbild,

Fig. 3    eine schematische Übersichtsdarstellung einer Windkraftanlage mit umgebender Wohnbebauung, und

Fig. 4    den Aufbau eines erfindungsgemäßen Lärmüberwachungssystems in schematischer Übersicht.

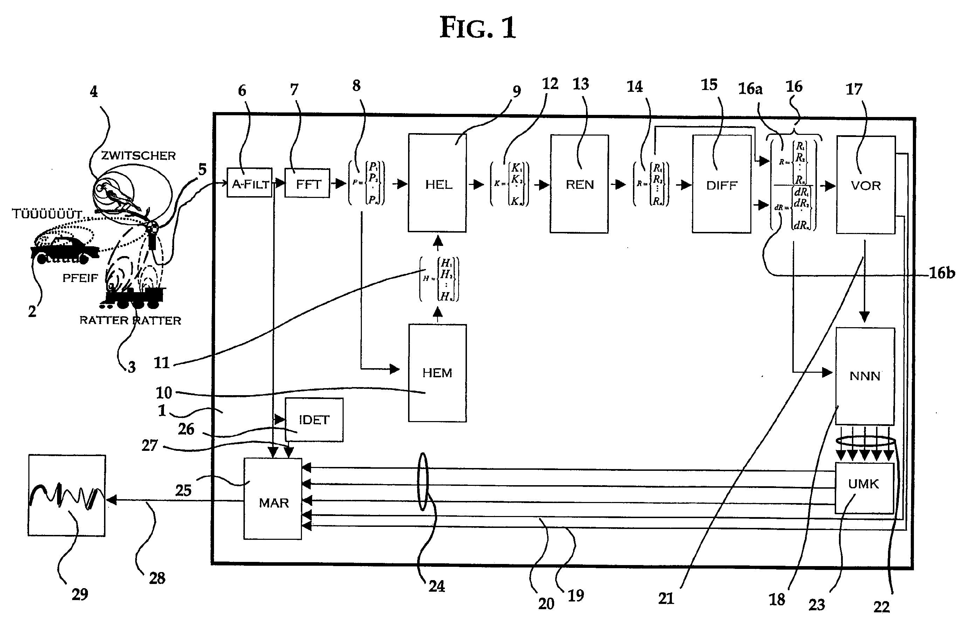

Fig. **1** zeigt eine erfindungsgemäße Vorrichtung zur Geräuscherkennung **1** im Blockschaltbild. In dieser Darstellung sind verschiedene Geräuschquellen, so ein Auto **2**, eine Lokomotive **3** und ein zwitschernder Vogel **4** zu sehen.

Das von all diesen Geräuschqellen mittels eines Mikrofons **5** aufgenommene akustische Signal wird dabei in der Vorrichtung **1** zunächst einem sogenannten A-Filter **6** zugeleitet, der zum einen aus dem Frequenzspektrum des Signals nur den hörbaren Bereich von vorzugsweise 16 Hz - 16 KHz passieren läßt und dabei das Signal einer sogenannten A-Bewertung unterzieht, die es entsprechend dem unterschiedlichen subjektiven menschlichen Wahrnehmungsvermögen für verschiedene Frequenzen bewertet. Das so bewertete Signal verläßt dann den A-Filter **6** wieder.

Vom A-Filter **6** wird das Signal nun einer Spektrumanalyseeinrichtung **7** zugeleitet, die das Signal mittels einer Fast Fourier Transformation in eine Anzahl **n** verschiedener Pegel (P) **8** für die **n** Frequenzbänder zerlegt.

Diese **n** verschiedenen Pegel (P) **8** werden nun zum einen einer Hintergrundgeräusch-Eliminationseinrichtung (HEL) **9** zugeführt und zum anderen einer Hintergrundgeräuschermittlungsvorrichtung (HEM) **10**, die für die Pegel (P) **8** jeweils die Hintergrundgeräuschpegel (H) 11 ermittelt, welche ebenfalls der Hintergrundgeräusch-Eliminationseinrichtung (HEL) **9** zugeführt werden. Die Hintergrundgeräusch-Eliminationseinrichtung (HEL) **9** zieht nun von den Pegeln (P) **8** die Hintergrundgeräuschpegel (H) **9** ab und gibt das Ergebnis als korrigierte Pegel (K) **12** wieder aus.

Die korrigierten Pegel (K) **12** werden der Renormierungseinrichtung (REN) **13** zugeführt, die sie renormiert und als renormierte Intensitäten (R) 14 wieder ausgibt.

Die renormierten Intensitäten (R) **14** werden wiederum einer Differenzierungseinrichtung (DIFF) **15** zugeführt, die sie nach der Zeit ableitet und dann von dem Ergebnis jeweils den Absolutbetrag bildet. Das hieraus erhaltene Ergebnis differenzierter renormierter Intensitäten (dR) **16b** wird sodann wieder ausgegeben und bildet zusammen mit den renormierten Intensitäten (R) **16a** den Signalvektor **16**.

Der Signalvektor **16** dient sodann sowohl der Vorerkennungeinrichtung (VOR) **17**, wie auch dem neuronalen Netz (NNN) zur Signalklassifikation **18** als Eingangsgröße.

Die Vorerkennungeinrichtung (VOR) **17** ermittelt nun hieraus ob es sich um einen Pfeifton, einen Ton oder keinen Ton handelt und gibt entsprechend die Vorerkennungsignale Ton **19**, Pfeifton **20** oder Kein-Ton **21** aus.

Das neuronale Netz (NNN) zur Signalklassifikation **18** klassifiziert das akustische Signal mit Hilfe des Signalvektors **16** und erzeugt verschiedene Klassifikationssignale **22**, die das akustische Signal entsprechend seinem Frequenzspektrum und/oder dessen zeitlicher Änderung klassifizieren.

Die Klassifikationssignale **22** werden einer Umklassifizierungsvorrichtung (UMK) **23** zugeführt, die sie zu drei Gruppen von Geräuschklassen zusammenfaßt und entsprechend der Zugehörigkeit eines Klassifikationssignals zu diesen Gruppen, eines von drei Geräuschklassensignalen **24** erzeugt.

Die Geräuschklassensignale **24**, werden ebenso wie die Vorerkennungssignale **19**, **20** einer Markierungsvorrichtung (MAR) **25** zugeführt, die damit den vom A-Filter **6** empfangenen Pegel entsprechend diesen Signalen **19**, **20**, **24** markiert. Diese Markierung kann dann z.B. als jeweils unterschiedliche farbige Darstellung des A-bewerteten Pegels, der den A-Filter **6** verlassen hat dargestellt werden.

Vor der Markierungsvorrichtung (MAR) **25** ist noch eine Impulserkennungsvorrichtung (IDET) **26** angeordnet, die gleichfalls den vom A-Filter **6** ausgegebenen Pegel empfängt und auf das Vorliegen eines Impulses hin testet. Liegt ein solcher Impuls an, so gibt sie für diese Zeit ein Impulserkennungssignal **27** aus, das ebenfalls der Markierungsvorrichtung (MAR) **25** zugeführt wird. Die Markierungsvorrichtung (MAR) **25** markiert damit den vom A-Filter **6** empfangenen Pegel vorrangig vor den durch die Geräuschklassensignale **24** oder Vorerkennungssignale **19**, **20** hervorgerufenen Markierungen.

Das markierte Pegelsignal **28** wird schließlich von der Markierungsvorrichtung (MAR) **25** ausgegeben und kann dann beispielsweise auf einer Anzeige **29** entsprechend der Amplitude seines jeweiligen Pegels und seiner Markierung dargestellt werden.

Fig. **2** zeigt eine Vorerkennungseinrichtung **17** als Fuzzy-Logic ausgeführt gleichfalls im Blockschaltbild. Der sich aus Amplituden **31** und aus Absolutbeträgen nach der Zeit abgeleiteter Amplituden **32** zusammensetzende Signalvektor **16** wird in seinem Amplitudenteil **31** durch eine erste Maximum-Ermittlungsvorrichtung **34** analysiert, wobei diese Ermittlunsgvorrichtung **34** sowohl die maximale Amplitude als auch die zweitgrößte Amplitude der n Amplituden ($A_1$ ... $A_n$) **31** jeweils als Ausgabesignal erzeugt. Eine zweite Maximum-Ermittlungsvorrichtung **33** analysiert die Absolutbeträge der nach der Zeit abgeleiteten n Amplituden ($dA_1$ ... $dA_n$) **32** und gibt deren Maximum aus.

Die so ermittelten Maxima werden nun der Vorerkennungseinrichtung **17**, die vorliegend als Fuzzy-Logic ausgestaltet ist zugeführt, wobei die maximale Amplitude aus der Vielzahl von Amplituden **32** einer ersten Fuzzifizierungseinrichtung (Fuzzy $Max_{A1}$) **30** als einem Empfangsmittel der Vorrichtung **17** zugeführt wird. Die zweitgrößte Amplitude aus der Vielzahl von Amplituden **31** wird einer zweiten Fuzzifizierungseinrichtung (Fuzzy Ma-x$_{A2}$) **35** als Empfangsmittel zugeführt. Schließlich wird der Absolutbetrag der maximalen nach der Zeit abgeleiteten Amplitude aus der Vielzahl von nach der Zeit abgeleiteten n Amplituden ($dA_1$ ... $dA_n$) **32** einer dritten Fuzzifizierungseinrichtung (Fuzzy $Max_{dA}$) **36** als Empfangsmittel zugeleitet.

Die Fuzzyfizierungseinrichtungen bilden die empfangenen Amplituden bzw. den empfangenen Absolutbetrag einer nach der Zeit abgeleiteten Amplitude mittels Zugehörigkeitsfunktionen entsprechend dem Grad ihrer Zugehörigkeit zu einer bestimmten Fuzzy-Menge auf linguistische Variable **37** ab. Dabei ist die Wahl des Verlaufes der entsprechenden Zugehörigkeitsfunktionen entsprechend der jeweiligen Aufgabe experimentell zu ermitteln.

Diese linguistischen nun mit Zugehörigkeitsgradwerten besetzten Variablen **37** werden von der Fuzzy-Logic mit ihrer Inferenzmaschine entsprechend den in einer Regelbasis **38** hinterlegten Regeln verarbeitet (inferiert). Als Ergebnis dieses Inferierens werden sodann Ergebnisse erhalten, die in einem Defuzzyfizietungsmodul38a defuzzyfiziert werden und dieses dann als Vorerkennungssignale **19**, **20**, **21** verlassen, die die Vorerkennungseinrichtung schließlich ausgibt.

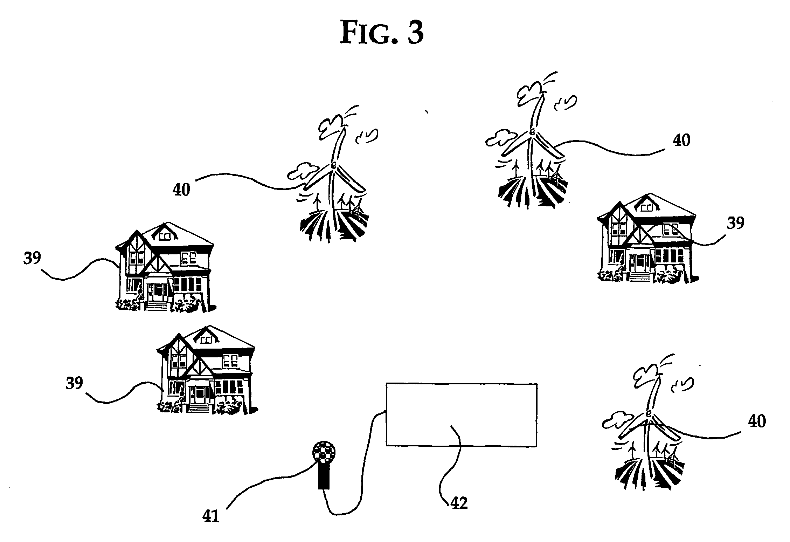

Fig. **3** zeigt eine schematische Übersichtsdarstellung einer Windkraftanlage mit umgebender Wohnbebauung **39**. Die Windkraftanlage besteht aus Windrädern **40**, die die Schallquellen der Windkraftanlge darstellen, sowie aus einer Meßstation an einem Meßort **41**, hier mittels eines Mikrofons dargestellt, mit dem am Meßort **41** gemessen wird. Das Meßsignal wird einer erfindungsgemäßen Vorrichtung zur Messung des Schallpegels von Windkraftanlagen **42** zugeführt, die es nun ermöglicht zunächst den Schallpegel der jeweils betrachteten Schallquelle **40** ohne Stör- und Hintergrundgeräusche am Meßort **41** zu bestimmen. Unter Berücksichtigung der zuvor bestimmten geometrischen und meteorologischen Gegebenheiten kann dann beispielsweise mittels der Verfahren nach VDI 2714 und/oder DE 197 40 783 A1 bzw. EP 0 831 310 A2 auf den von den Schallquellen **40** jeweils ausgehenden Schallpegel geschlossen werden. Damit ist es sodann möglich (wiederum beispielsweise mittels der zuvor erwähnten Verfahren nach VDI 2714 und/oder DE 197 40 783 A1 bzw. EP 0 831 310 A2) denn Schallpegel an den Wohnbebauungsorten als Bestimmungsorten **39** zu bestimmen, ohne daß es dort einer eigenen Messung bedarf.

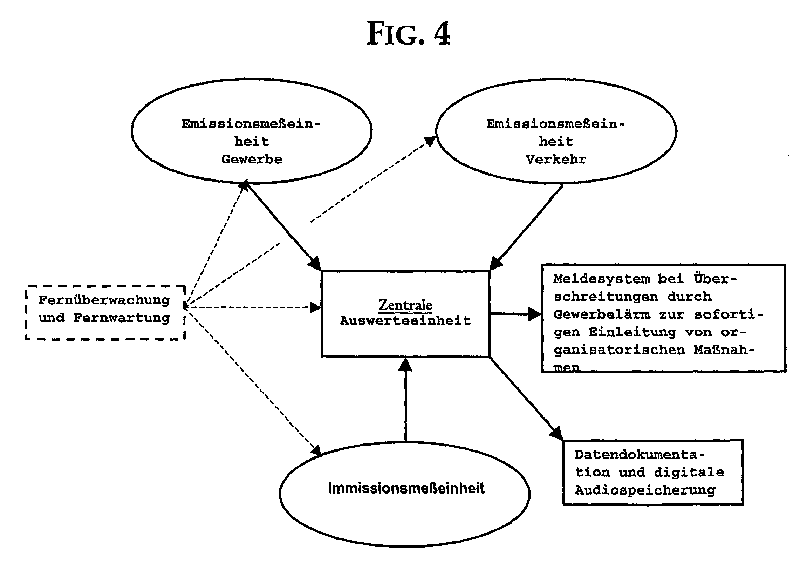

Fig. **4** zeigt den Aufbau eines erfindungsgemäßen Lärmüberwachungssystems, wie es sich etwa zur Überwachung von Hafenanlagen eignet, in schematischer Übersicht. Es basiert dabei auf einer Vernetzung von sogenannten Emmissions- und Immissionsmeßeinheiten.

**Patentansprüche**

1. Vorrichtung zur Geräuscherkennung in akustischen Signalen (**1**) mit zumindest einer Renormierungseinrichtung (**13**),

   die Mittel vorsieht, die jeweils zum Empfang der Amplitude (**12, 31**) eines bestimmten Frequenzbandes aus dem Frequenzspektrum des akustischen Signals dienen, sowie Mittel, die diese Amplitude oder Amplituden (**12, 31**) so renormiert bezichungsweise renormieren, daß nach der Renormierung die Amplituden nur noch in ihren relativen Verhältnissen zueinander vorliegen und

   weiterhin einer Differenzierungseinrichtung (**15**),

   die Mittel vorsieht, die die renormierte Amplitude oder renormierten Amplituden (**14, 31**) nach der Zeit zumindest einfach ableitet bezichungsweise ableiten oder die die renormierte Amplitude oder renormierten Amplituden (**14, 31**) nach der Zeit zumindest einfach ableitet bezichungsweise ableiten und hernach aus der nach der Zeit abgeleiteten Amplitude oder den nach der Zeit abgeleiteten Amplituden (**16b, 32**) den jeweiligen Absolutbetrag ohne negatives Vorzeichen bilden, sowie mit

   einem neuronalen Netzwerk (**18**) mit

   Eingangsneuronen, Ausgangsneuronen und mit Gewichten versehenen Verbindungen zwischen den Neuronen, wobei die Eingangsneuronen, jeweils zum Empfang der renormierten und nach der Zeit abgeleiteten Amplitude (**16b**, **32**) eines bestimmten Frequenzbandes aus dem Frequenzspektrum des akustischen Signals oder deren jeweiligen Absolutbetrages vorgesehen sind, und die Ausgangsneuronen zumindest ein Klassifikations-Signal (**22**) erzeugen, welches das akustische Signal entsprechend seinem Frequenzspektrum klassifiziert,

   wobei das Klassifikationssignal oder die Klassifikationssignale Aufschluß über die Art des akustischen Signals gibt bezichungsweise geben,

2. Vorrichtung zur Geräuscherkennung in akustischen Signalen nach Anspruch 1, **dadurch gekennzeichnet, daß** die Renormierungseinirichtung (**13**) die Amplitude oder Amplituden (**12, 31**) so renormiert, daß nach der Renormierung die Amplituden nur noch in ihren relativen Verhältnissen zueinander vorliegen wobei die Summe aller Amplituden (**14, 31**) nach der Renormierung gleich einer Konstante ist und die Amplituden (**14, 31**) je paarweise vor der Renormierung im gleichen Verhältnis zueinander stehen wie nach der Renormierung.

3. Vorrichtung zur Geräuscherkennung in akustischen Signalen nach Anspruch 2, **dadurch gekennzeichnet, daß** die Konstante als die Zahl Eins gewählt wird.

4.  Vorrichtung zur Geräuscherkennung in akustischen Signalen nach einem der Ansprüche 1 bis 3, **dadurch gekennzeichnet, daß** das neuronale Netzwerk (**18**) auch Eingangsneuronen aufweist, die jeweils zum Empfang der Amplitude (**12, 31**) oder der renormierten Amplitude (**14, 16a, 31**) eines bestimmten Frequenzbandes aus dem Frequenzspektrum des akustischen Signals vorgesehen sind.

5.  Vorrichtung zur Geräuscherkennung in akustischen Signalen nach Anspruch 4, **dadurch gekennzeichnet, daß** sie weiterhin eine Vorerkennungseinrichtung (**17**) aufweist,
    die wiederum Mittel vorsieht, die jeweils zum Empfang der Amplitude (**31**) eines bestimmten Frequenzbandes aus dem Frequenzspektrum des akustischen Signals dienen,
    sowie Mittel, die jeweils zum Empfang der nach der Zeit abgeleiteten Amplitude (**32**) eines bestimmten Frequenzbandes aus dem Frequenzspektrum des akustischen Signals oder deren Absolutbetrages dienen,
    wobei die Vorerkennungseinrichtung zumindest ein Vorerkennungssignal (**19, 20, 21**) erzeugt, welches das akustische Signal nach den Kategorien Ton (**19**), Pfeifton (**20**) und Kein-Ton (**21**) klassifiziert, und so weiteren Aufschluß über die Art des akustischen Signals gibt,
    und das neuronale Netz von zumindest einem der Vorerkennungssignale aktiviert wird, wenn das akustische Signal von der Vorerkennungseinrichtung als ein solches der Kategorie Kein-Ton (**21**) klassifiziert wurde.

6.  Vorrichtung zur Geräuscherkennung in akustischen Signalen nach Anspruch 5, **dadurch gekennzeichnet, daß** von der Vorerkennungseinrichtung immer dann ein Vorerkennungssignal erzeugt wird, welches das akustische Signal nach der Kategorie Ton (**19**) klassifiziert, wenn mindestens eine Amplitude eines bestimmten Frequenzbandes aus dem Frequenzspektrum des akustischen Signals oberhalb eines vorgewählten Tonschwellwertes liegt.

7.  Vorrichtung zur Geräuscherkennung in akustischen Signalen nach Anspruch 5 oder 6, **dadurch gekennzeichnet, daß** von der Vorerkennungseinrichtung immer dann ein Vorerkennungssignal erzeugt wird, welches das akustische Signal nach der Kategorie Pfeifton (**20**) klassifiziert, wenn mindestens eine nach der Zeit abgeleitete Amplitude eines bestimmten Frequenzbandes aus dem Frequenzspektrum des akustischen Signals oder deren Absolutbetrag oberhalb eines vorgewählten Pfeiftonschwellwertes liegt.

8.  Vorrichtung zur Geräuscherkennung in akustischen Signalen nach Anspruch 5, **dadurch gekennzeichnet, daß** von der Vorerkennungseinrichtung immer dann ein Vorerkennungssignal erzeugt wird, welches das akustische Signal nach der Kategorie Ton (**19**) klassifiziert, wenn mindestens eine Amplitude eines bestimmten Frequenzbandes aus dem Frequenzspektrum des akustischen Signals oberhalb eines vorgewählten Tonschwellwertes liegt
    und immer dann ein Vorerkennungssignal erzeugt wird, welches das akustische Signal nach der Kategorie Pfeifton (**20**) klassifiziert, wenn mindestens eine nach der Zeit abgeleitete Amplitude eines bestimmten Frequenzbandes aus dem Frequenzspektrum des akustischen Signals oder deren Absolutbetrag oberhalb als eines vorgewählten Pfeiftonschwellwertes liegt
    und immer dann ein Vorerkennungssignal erzeugt wird, welches das akustische Signal nach der Kategorie Kein-Ton (**21**) klassifiziert, wenn das akustische Signal weder nach der Kategorie Ton noch nach der Kategorie Pfeifton klassifiziert wird.

9.  Vorrichtung zur Geräuscherkennung in akustischen Signalen nach Anspruch 5, **dadurch gekennzeichnet, daß** als Vorerkennungsvorrichtung (**17**) eine Fuzzy-Logic vorgesehen ist, die
    wiederum Mittel (**30, 35**) vorsieht, die jeweils zum Empfang der Amplitude eines bestimmten Frequenzbandes aus dem Frequenzspektrum des akustischen Signals dienen,
    sowie Mittel (**36**), die jeweils zum Empfang der nach der Zeit abgeleiteten Amplitude eines bestimmten Frequenzbandes aus dem Frequenzspektrum des akustischen Signals oder deren Absolutbetrages dienen,
    wobei die so empfangenen Amplituden (**31**) oder abgeleiteten Amplituden bzw. deren Absolutbeträge (**32**) jeweils fuzzyfiziert, d.h. entsprechend einer Zugehörigkeitsfunktion auf linguistische Variable (**37**) abgebildet werden, und die Fuzzy-Logic mittels einer Inferenzmaschine die so fuzzyfizierten Amplituden (**31**) und/oder nach der Zeit abgeleiteten Amplituden (**32**) oder deren Absolutbetrag mittels in einer Wissensbasis hinterlegter Regeln (**38**) zu zumindest einem Vorerkennungssignal (**19, 20, 21**) inferiert, welches oder welche das akustische Signal nach den Kategorien Ton, Pfeifton und Kein-Ton klassifiziert bezichungsweise klassifizieren, und so Aufschluß über die Art des akustischen Signals gibt bezichungsweise geben.

10. Vorrichtung zur Geräuscherkennung in akustischen Signalen nach Anspruch 9, **dadurch gekennzeichnet, daß** als Vorerkennungsvorrichtung (**17**) eine Fuzzy-Logic vorgesehen ist, die wiederum Mittel (**30**, **35**) vorsieht, die zum Empfang der maximalen Amplitude aus einer Vielzahl von, zu bestimmten Frequenzbändern gehörigen Amplituden aus dem Frequenzspektrum des akustischen Signals dienen, und

weiterhin zum Empfang der zweitgrößten Amplitude aus einer Vielzahl von, zu bestimmten Frequenzbändern gehörigen, Amplituden aus dem Frequenzspektrum des akustischen Signals dienen,

sowie Mittel (**36**), die zum Empfang der maximalen nach der Zeit abgeleiteten Amplitude oder deren Absolutbetrags aus einer Vielzahl von, zu bestimmten Frequenzbändern gehörigen abgeleiten Amplituden oder deren Absolutbeträge aus dem Frequenzspektrum des akustischen Signals dienen,

wobei die so empfangenen Amplituden (**31**) oder abgeleiteten Amplituden (**32**) bzw. deren Absolutbeträge jeweils fuzzyfiziert, d.h. entsprechend einer Zugehöngkeitsfunktion auf linguistische Variable (**37**) abgebildet werden, und die Fuzzy-Logic mittels einer Inferenzmaschine die so fuzzyfizierten Amplituden und/oder nach der Zeit abgeleiteten Amplituden (**32**) oder deren Absolutbetrag mittels in einer Wissensbasis hinterlegter Regeln (**38**) zu zumindest einem Vorerkennungssignal (**19**, **20**, **21**) inferiert, welches oder welche das akustische Signal nach den Kategorien Ton, Pfeifton und Kein-Ton klassifiziert bezichungsweise klassifizieren, und so Aufschluß über die Art des akustischen Signals gibt bezichungsweise geben.

**11.** Vorrichtung zur Geräuscherkennung in akustischen Signalen nach einem der Ansprüche 1 bis 10, **dadurch gekennzeichnet, daß** die Vorrichtung weiterhin eine Vorrichtung zur Hintergrundgeräuschermittlung (**10**) in akustischen Signalen aufweist, die jeweils die HintergrundgeräuschAmplitude (**11**) eines bestimmten Frequenzbandes aus dem Frequenzspektrum des zum akustischen Signal gehörigen jeweiligen Hintergrundgeräusches ermittelt, wobei sie

Mittel aufweist, die jeweils zum Empfang der jeweils aktuell gemessenen Amplitude (**31**) eines bestimmten Frequenzbandes aus dem Frequenzspektrum des akustischen Signals dienen, und

die Hintergrundgeräuschermittlung ausgehend von einer zu Betriebsbeginn hoch gewählten fiktiven Start-Hintergrundgeräusch-Amplitude derart geschieht, daß die jeweilige Hintergrund-geräusch-Amplitude (**11**) jeweils nach einer von Zeit zu Zeit erfolgenden Messung der aktuell herrschenden Amplitude (**31**) des zugehörigen Frequenzbandes immer dann auf den letzten Meßwert korrigiert wird, wenn dieser Meßwert kleiner als der Wert der bis zu diesem Zeitpunkt solchermaßen ermittelten Hintergrundgeräusch-Amplitude (**11**) war, und

weiterhin Ausgabemittel vorgesehen sind, die die ermittelten Hintergrundgeräusch-Amplituden (**11**) eines bestimmten Frequenzbandes aus dem Frequenzspektrum des akustischen Signals ausgeben.

**12.** Vorrichtung zur Geräuscherkennung in akustischen Signalen nach einem der Ansprüche 1 bis 10, **dadurch gekennzeichnet, daß** die Vorrichtung weiterhin eine Vorrichtung zur Hintergrundgeräuschenmittlung (**10**) in akustischen Signalen aufweist, die jeweils die Hintergrundgeräusch-Amplitude (**11**) eines bestimmten Frequenzbandes aus dem Frequenzspektrum des zum akustischen Signal gehörigen jeweiligen Hintergrundgeräusches ermittelt, wobei sie

Mittel aufweist, die jeweils zum Empfang der jeweils aktuell gemessenen Amplitude (**31**) eines bestimmten Frequenzbandes aus dem Frequenzspektrum des akustischen Signals dienen, und

die Hintergrundgeräuschermittlung ausgehend von einer zu Betriebsbeginn hoch gewählten fiktiven Start-Hintergrundgeräusch-Amplitude derart geschieht, daß die jeweilige Hintergrundgeräusch-Amplitude (**11**) jeweils nach einer von Zeit zu Zeit erfolgenden Messung der aktuell herrschenden Amplitude (**31**) des zugehörigen Frequenzbandes immer dann auf den letzten Meßwert korrigiert wird, wenn dieser Meßwert kleiner als der Wert der bis zu diesem Zeitpunkt ermittelten Hintergrundgeräusch-Amplitude (**11**) zuzüglich eines bestimmten konstanten Aufschlages war, und

weiterhin Ausgabemittel vorgesehen sind, die die ermittelten Hintergrundgeräusch-Amplituden (**11**) eines bestimmten Frequenzbandes aus dem Frequenzspektrum des akustischen Signals ausgeben.

**13.** Vorrichtung zur Geräuscherkennung in akustischen Signalen nach Anspruch 11 oder 12, **dadurch gekennzeichnet, daß** die Vorrichtung zur Hintergrundgeräuschermittlung in akustischen Signalen (**10**) vor jeder von Zeit zu Zeit erfolgenden Messung der aktuell herrschenden Amplitude (**31**) die jeweilige bis zu diesem Zeitpunkt ermittelte Hintergrundgeräusch-Amplitude (**11**) um einen bestimmten festen Zuschlag erhöht.

**14.** Vorrichtung zur Geräuscherkennung in akustischen Signalen nach Anspruch 11, 12 oder 13, **dadurch gekennzeichnet, daß** sie weiterhin eine Hintergrundgeräusch-Eliminationseinrichtung (**9**) aufweist,

die wiederum Mittel vorsieht, die jeweils zum Empfang der Amplitude (**31**) eines bestimmten Frequenzbandes aus dem Frequenzspektrum des akustischen Signals dienen,

sowie Mittel, die jeweils zum Empfang der Hintergrundgeräusch-Amplitude (**11**) eines bestimmten Frequenzbandes aus dem Frequenzspektrum des zum akustischen Signal gehörigen jeweiligen Hintergrundgeräusches dienen, und Mittel, die von der jeweiligen Amplitude (**31**) eines bestimmten Frequenzbandes aus dem Frequenzspektrum des akustischen Signals die Hintergrundgeräusch-Amplitude (**11**) des entsprechenden Frequenzbandes aus dem Frequenzspektrum des zum akustischen Signal gehörigen jeweiligen Hintergrundgeräusches zum Abzug bringen,

weiterhin Ausgabemittel, die die vom Hintergrundgeräusch solchermaßen befreite Amplitude oder befreiten Amplituden (**12**) eines bestimmten Frequenzbandes aus dem Frequenzspektrum des akustischen Signals ausgeben.

15. Vorrichtung zur Geräuscherkennung in akustischen Signalen nach einem der Ansprüche 1 bis 14, **dadurch gekennzeichnet, daß** sie weiterhin eine Umklassifizierungsvorrichrung (23) aufweist, welche Mittel zum Empfang der jeweiligen Klassifikationssignale (**22**) und/oder jeweiligen Vorerkennungssignale aufweist, wobei die Umklassifizierungsvorrichtung (**23**) zumindest ein Geräuschklassensignal (**24**) hieraus erzeugt und ausgibt, welches das akustische Signal einer oder mehreren Geräuschkategorien zuordnet.

16. Vorrichtung zur Messung des Schallpegels von Windkraftanlagen (**42**), **dadurch gekennzeichnet, daß** diese eine Vorrichtung zur Geräuscherkennung in akustischen Signalen (**1**) nach einem der Ansprüche 1 bis 15 aufweist, welche ein der Umgebung von Windkraftanlagen entstammendes akustisches Signal auswertet und deren Ausgangsneuronen zumindest ein Klassifikations-Signal (**22**) erzeugen, welches oder welche über die Art des der Umgebung von Windkraftanlagen entstammenden akustischen Signals zumindest insoweit Aufschluß gibt oder geben, als daß das akustische Signal zumindest nach den Kategorien Windkraftanlagen-Schall einerseits und Kein-Windkraftanlagen-Schall andererseits klassifiziert wird, wobei das akustische Signal nur insoweit zur Messung des Schallpegels berücksichtigt wird, als es von der Vorrichtung zur Geräuscherkennung in akustischen Signalen als Windkraftanlagen-Schall klassifiziert wird.

17. Vorrichtung zur Messung des Schallpegels von Windkraftanlagen (**42**) nach Anspruch 16, **dadurch gekennzeichnet, daß** die Ausgangsneuronen zumindest ein Klassifikations-Signal (**22**) erzeugen, welches oder welche über die Art des der Umgebung von Windkraftanlagen entstammenden akustischen Signals zumindest insoweit Aufschluß gibt oder geben, als daß das akustische Signal zumindest nach den Kategorien Windkraftanlagen-Schall einerseits und Wind-Schall-Tieffrequent oder Wind-Schall-Hochfrequent andererseits klassifiziert wird, wobei das akustische Signal nur insoweit zur Messung des Schallpegels berücksichtigt wird, als es von der Vorrichtung zur Geräuscherkennung in akustischen Signalen als Windkraftanlagen-Schall klassifiziert wird.

18. Vorrichtung zur Messung des Schallpegels von Windkraftanlagen (**42**) nach Anspruch 16, insoweit dieser auf Anspruch 5 rückbezogen ist, **dadurch gekennzeichnet, daß** die Ausgangsneuronen zumindest ein Klassifikations-Signal (**22**) erzeugen, welches oder welche über die Art des der Umgebung von Windkraftanlagen entstammenden akustischen Signals insoweit Aufschluß gibt oder geben, als daß das akustische Signal zumindest nach den Kategorien Windkraftanlagen-Schall einerseits und Kein-Windkraftanlagen-Schall andererseits klassifiziert wird und die Vorerkennungsvorrichtung zumindest ein Vorerkennungssignal (**19, 20, 21**) erzeugt, welches das akustische Signal nach den Kategorien Ton, vorzugsweise Wind-Ton, Pfeifton, vorzugsweise Wind-Pfeifton, und Kein-Ton klassifiziert, wobei das akustische Signal nur insoweit zur Messung des Schallpegels berücksichtigt wird, als es von der Vorrichtung zur Geräuscherkennung in akustischen Signalen als Windkraftanlagen-Schall klassifiziert wird.

19. Vorrichtung zur Messung des Schallpegels von Windkraftanlagen (**42**), **dadurch gekennzeichnet, daß** diese eine Vorrichtung zur Geräuscherkennung in akustischen Signalen nach Anspruch 15 aufweist, wobei diese Vorrichtung ein der Umgebung von Windkraftanlagen entstammendes akustisches Signal auswertet und die Umklassifizierungsvorrichtung zumindest ein Geräuschklassensignal (**24**) hieraus erzeugt, welches oder welche das akustische Signal zumindest als Windkraftanlagen-Schall oder Kein-Windkraftanlagen-Schall klassifiziert bezichungsweise klassifizieren, wobei das akustische Signal nur insoweit zur Messung des Schallpegels berücksichtigt wird, als es von der Vorrichtung zur Geräuscherkennung in akustischen Signalen als Windkraftanlagen-Schall klassifiziert wird.

20. Vorrichtung zur Messung des Schallpegels von Windkraftanlagen (**42**) nach einem der Ansprüche 16 bis 19, **dadurch gekennzeichnet, daß** eine Mittelungsvorrichtung zur Mittelung, vorzugsweise langfristigen Mittelung des während des Betriebes der Windkraftanlage gemessenen Geräuschpegels vorgesehen ist, wobei nur solche während des Betriebes der Windkraftanlage gemessenen Pegel von der Mittelungsvorrichtung zur Bildung des Mittels berücksichtigt werden, die von einem akustischen Signal herrühren, welches von der Vorrichtung zur Geräuscherkennung in akustischen Signalen als Windkraftanklagen-Schall klassifiziert wurde.

21. Vorrichtung zur Messung des Schallpegels von Windkraftanlagen (**42**) nach Anspruch 20, **dadurch gekennzeichnet, daß** weiterhin eine Überwachungsvorrichtung vorgesehen ist, die die gleitende Mittelung des während des Betriebes der Windkraftanlage gemessenen Schallpegels auf die Überschreitung eines Grenzwertes hin überwacht.

22. Lärmüberwachungsvorrichtung zur Messung des Schallpegels von Lärmemmissionsgebieten, insbesondere Gewerbegelärmgebieten, **dadurch gekennzeichnet, daß** diese eine Vorrichtung zur Geräuscherkennung in akustischen Signalen (**1**) nach einem der Ansprüche 1 bis 15 aufweist, welche ein in einem Immissionsbereich, vorzugsweise in einem zu dem zu überwachenden Lärmemmisionsgebiet angrenzenden Gebiet, gemessenes akustisches Signal auswertet und deren Ausgangsneuronen zumindest ein Klassinkations-Signal (**22**) erzeugen, welches oder welche über die Art des akustischen Signals zumindest insoweit Aufschluß gibt bezichungsweise geben, als daß das akustische Signal zumindest nach den Kategorien Lärmemmisionsgebietschall einerseits und Kein-Lärmemmisionsgebietschall andererseits klassifiziert wird.

23. Lärmüberwachungsvorrichtung zur Messung des Schallpegels von Lärmemmissionsgebieten, insbesondere Gewerbegelärmgebieten, **dadurch gekennzeichnet, daß** diese eine Vorrichtung zur Geräuscherkennung in akustischen Signalen nach Anspruch 15 aufweist, wobei diese Vorrichtung ein in einem Immissionsbereich, vorzugsweise in einem zu dem zu überwachenden Lärmemmisionsgebiet angrenzenden Gebiet, gemessenes akustisches Signal auswertet und die Umklassifizierungsvorrichtung zumindest ein Geräuschklassensignal (**24**) hieraus erzeugt, welches oder welche das akustische Signal zumindest als Lännemmissionsgebietschall oder Kein-Lärmemmissionsgebietschall klassifiziert bezichungsweise klassifiezen.

24. Lärmüberwachungsvorrichtung zur Messung des Schallpegels von Lärmemmissionsgebieten nach Anspruch 22 oder 23, **dadurch gekennzeichnet, daß** das akustische Signal nur insoweit zur Messung des Schallpegels berücksichtigt wird, als es von der Vorrichtung zur Geräuscherkennung in akustischen Signalen als Lärmemmissionsgebietschall klassifiziert wird.

25. Lärmüberwachungsvorrichtung zur Messung des Schallpegels von Lärmemmisionsgebieten nach Anspruch 22, 23 oder 24, **dadurch gekennzeichnet, daß** die Vorrichtung zur Geräuscherkennung in akustischen Signalen (**1**) ein im zu überwachenden Lärmemmisionsgebiet gemessenes akustisches Signal auswertet und deren Ausgangsneuronen zumindest ein Klassifikations-Signal (**22**) erzeugen, welches oder welche über die Art des akustischen Signals Aufschluß gibt bezichungsweise geben und es somit klassifiziert klassifizieren.

26. Lärmüberwachungsvorrichtung zur Messung des Schallpegels von Lärmemmissionsgebieten nach Anspruch 22, 23 oder 24, **dadurch gekennzeichnet, daß** diese weiterhin auch eine Vorrichtung zur Geräuscherkennung in akustischen Signalen nach Anspruch 15 aufweist, wobei diese Vorrichtung ein im zu überwachenden Lärmemmisionsgebiet gemessenes akustisches Signal auswertet und die Umklassifizierungsvorrichtung zumindest ein Geräuschklassensignal (**24**) hieraus erzeugt, welches oder welche das akustische Signal klassifiziert bezichungsweise klassifizieren.

27. Lärmüberwachungsvorrichtung zur Messung des Schallpegels von Lärmemmissionsgebieten nach Anspruch 25 oder 26, **dadurch gekennzeichnet, daß** zusätzlich eine zentrale Auswerteeinheit vorgesehen ist, welche mit der Immissionsmeßstelle und der Emmissionsmeßstelle verbunden ist, die eine Alarmmeldung auslöst, wenn ein Immissionsrichtwert überschritten wird oder eine solche Überschreitung droht, wobei die Alarmmeldung entsprechend dem aus der Auswertung des im Lärmemmisionsgebiet gemessenen akustischen Signals erzeugten Klassifikations-Signal oder Geräuschklassensignal einer hierzu gehörigen wahrscheinlichen Geräuschquelle zugeordnet wird.

**Claims**

1. Apparatus for noise identification in acoustic signals (1) having at least
   one renormalization device (13),
   which provides means which are each used to receive the amplitude (**12, 31**) of a specific frequency band from the frequency spectrum of the acoustic signal,
   as well as means which renormalize this amplitude or these amplitudes (**12, 31**) such that, after renormalization, the amplitudes exist only in their relative ratios with respect to one another, and
   furthermore having a differentiation device (**15**),
   which provides means which derive the renormalized amplitude or renormalized amplitudes (**14, 31**) at least once on the basis of time, or
   which derive the renormalized amplitude or renormalized amplitudes (**14, 31**) at least once on the basis of time, and, after this, form the respective absolute magnitude, without any negative mathematical sign, from the amplitude derived on the basis of time or from the amplitudes (**16b, 32**) derived on the basis of time, and have
   a neuron network (**18**) with
   input neurons, output neurons and links provided with weights between the neurons,
   with the input neurons in each case being provided for reception of the renormalized amplitude (**16b, 32**), derived on the basis of time, of a specific frequency band from the frequency spectrum of the acoustic signal or from its respective absolute magnitude, and
the output neurons produce at least one classification signal (**22**), which classifies the acoustic signal in accordance with its frequency spectrum,
with the classification signal or the classification signals provided a conclusion about the nature of the acoustic signal.

2. Apparatus for noise identification in acoustic signals according to Claim 1, **characterized in that** the renormalization device (**13**) renormalizes the amplitude or amplitudes (**12, 31**) such that, after renormalization, the amplitudes exist only in their relative ratios with respect to one another, with the sum of all the amplitudes (**14, 31**) after renormalization being equal to a constant, and with the amplitudes (**14, 31**) in each case having the same ratio with respect to one another in pairs before renormalization and after renormalization.

3. Apparatus for noise identification in acoustic signals according to Claim 2, **characterized in that** the constant is chosen to be the number one.

4. Apparatus for noise identification in acoustic signals according to one of Claims 1 to 3, **characterized in that** the neuron network (**18**) also has input neurons which are each intended for reception of the amplitude (**12, 31**) or of the renormalized amplitude (**14, 16a, 31**) of a specific frequency band from the frequency spectrum of the acoustic signal.

5. Apparatus for noise identification in acoustic signals according to Claim 4, **characterized in that** the apparatus also has an initial identification device (**17**),
which in turn provides means which are each used for reception of the amplitude (**31**) of a specific frequency band from the frequency spectrum of the acoustic signal,
as well as means which are each used for reception of the amplitude (**32**), derived on the basis of time, of a specific frequency band from frequency spectrum of the acoustic signal or its absolute magnitude,
with the initial identification device produced in at least one initial identification signal (**19, 20, 21**) which classifies the acoustic signal on the basis of the categories of tone (**19**), whistling tone (**20**) and no tone (**21**), thus provide a further conclusion about the nature of the acoustic signal,
and the neuron network is activated by at least one of the initial identification signals when the acoustic signal has been classified by the initial identification, as a signal in the no-tone (**21**) category.

6. Apparatus for noise identification in acoustic signals according to Claim 5, **characterized in that** the initial identification device produces an initial identification signal, which classifies the acoustic signal in the tone (**19**) category, whenever at least one amplitude in a specific frequency band from the frequency spectrum of the acoustic signal occurs above a preselected tone threshold value.

7. Apparatus for noise identification in acoustic signals according to Claim 5 or 6, **characterized in that** the initial identification device produces an initial identification signal which classifies the acoustic signal in the whistling tone (**20**) category whenever at least one amplitude, which is derived on the basis of time, in a specific frequency band from the frequency spectrum in the acoustic signal or its absolute magnitude is above a preselected whistling tone threshold value.

8. Apparatus for noise identification in acoustic signals according to Claim 5, **characterized in that** the initial identification device produces an initial identification signal which classifies the acoustic signal in the tone (**19**) category whenever at least one amplitude in a specific frequency band from the frequency spectrum of the acoustic signal is above a preselected tone threshold value,
and produces an initial identification signal which classifies the acoustic signal in the whistling tone (20) category whenever at least one amplitude, which is derived on the basis of time, in a specific frequency band from the frequency spectrum of the acoustic signal or its absolute magnitude is above a preselected whistling tone threshold value and
produces an initial identification signal which classifies the acoustic signal in the no-tone (**21**) category whenever the acoustic signal is classified as being neither in the tone category nor in the whistling tone category.

9. Apparatus for noise identification in acoustic signals according to Claim 5, **characterized in that** fuzzy logic is provided as the initial identification device (**17**), and
once again provides means (**30, 35**) which are in each case used for the reception of the amplitude of a specific frequency band in the frequency spectrum of the acoustic signal,

as well as means (**36**) which are in each case used for reception of the amplitude, derived over time, in a specific frequency band from the frequency spectrum of the acoustic signal or its absolute magnitude,
with the amplitudes (**31**) received in this way, or the derived amplitudes or their absolute magnitudes (**32**) in each case being fuzzified, that is to say being mapped on to linguistic variables (**37**) in accordance with an association function, and
the fuzzy logic using an inference machine to infer the amplitudes (**31**) which have been fuzzed in this way and/or the amplitudes (**32**) which have been derived on the basis of time or their absolute magnitude by means of rules (**38**), which are stored in a knowledge base and relate to at least one initial identification signal (**19, 20, 21**) which classifies or classify the acoustic signal in the tone, whistling tone or no tone categories, thus providing a conclusion about the nature of the acoustic signal.

10. Apparatus for noise identification in acoustic signals according to Claim 9, **characterized in that** fuzzy logic is provided as the initial identification apparatus (**17**) and
once again provides means (**30, 35**) which are used for reception, of the maximum amplitude from a multiplicity of amplitudes associated with specific frequency bands from the frequency spectrum of the acoustic signal, and are also used for reception of the second highest amplitude from a multiplicity of amplitudes associated with specific frequency bands from the frequency spectrum of the acoustic signal,
as well as means (**36**) which are used for reception of the maximum amplitude, derived on the basis of time, or its absolute magnitude from a multiplicity of derived amplitudes associated with specific frequency bands, or their absolute magnitudes, from the frequency spectrum of the acoustic signal,
with the amplitudes (**31**) or derived amplitudes (**32**), or their absolute magnitudes, received in this way in each case being fuzzified, that is to say being mapped on to linguistic variables (**37**) in accordance with an association function, and
the fuzzy logic using an inference machine to infer the amplitudes which have been fuzzed in this way and/or the amplitudes (**32**) which have been derived on the basis of time or the absolute magnitude by means of rules (**38**), which are stored in a knowledge base and relate to at least one initial identification signal (**19, 20, 21**) which classifies or classify the acoustic signal in the tone, whistling tone or no tone categories, thus providing a conclusion about the nature of the acoustic signal.

11. Apparatus for noise identification in acoustic signals according to one of Claims 1 to 10, **characterized in that** the apparatus also has an apparatus for background noise determination (**10**) in acoustic signals, which in each case determines the background noise amplitude (**11**) in a specific frequency band from the frequency spectrum of the respective background noise associated with the acoustic signal, with the apparatus
having means which are in each case used for reception of the respectively currently measured amplitude (**31**) in a specific frequency band from the frequency spectrum of the acoustic signal, and
the background noise being determined on the basis of a fictional initial background noise amplitude, which is chosen to be high at the start of operation, such that the respective background noise amplitude (**11**) is in each case corrected after measurement, which is carried out from time to time, of the currently prevailing amplitude (**31**) in the associated frequency band on the most recent measured value, whenever this measured value is less than the value of the background noise amplitude (**11**) determined in this way at this time, and
output means are also provided which output the determined background noise amplitudes (**11**) in a specific frequency band from the frequency spectrum of the acoustic signal.

12. Apparatus for noise identification in acoustic signals according to one of Claims 1 to 10, **characterized in that** the apparatus also has an apparatus for background noise determination (**10**) in acoustic signals, which in each case determines the background noise amplitude (**11**) in a specific frequency band from the frequency spectrum of the respective background noise associated with the acoustic signal, with the apparatus
having means which are in each case used for reception of the respectively currently measured amplitude (**31**) in a specific frequency band from the frequency spectrum of the acoustic signal, and
the background noise being determined on the basis of a fictional initial background noise amplitude, which is chosen to be high at the start of operation, such that the respective background noise amplitude (**11**) is in each case corrected after measurement, which is carried out from time to time, of the currently prevailing amplitude (**31**) in the associated frequency band on the most recent measured value, whenever this measured value is less than the value of the background noise amplitude (**11**) determined in this way at this time, plus a specific constant offset, and
output means are also provided which output the determined background noise amplitudes (**11**) in a specific frequency band from the frequency spectrum of the acoustic signal.

13. Apparatus for noise identification in acoustic signals according to Claim 11 or 12, **characterized in that** the apparatus for background noise determination in acoustic signals (**10**) increases the respective background noise amplitude (**11**) determined at this time by a specific fixed supplement before each measurement, which is carried out from time to time, of the currently prevailing amplitude (**31**).

14. Apparatus for noise identification in acoustic signals according to Claim 11, 12 or 13, **characterized in that** the apparatus also has a background noise elimination device (**9**),
which once again provides means which are in each case used for reception of the amplitude (**31**) and a specific frequency band from the frequency spectrum of the acoustic signal,
as well as means which are in each case used for reception of the background noise amplitude (**11**) in a specific frequency band from the frequency spectrum of the respective background noise associated with the acoustic signal, and means which subtract the background noise amplitude (**11**) in the corresponding frequency band from the frequency spectrum of the respective background noise associated with the acoustic signal from the respective amplitude (**31**) in a specific frequency band from the frequency spectrum of the acoustic signal,
as well as output means, which output the amplitude or amplitudes (**12**) from which the background noise has been removed in this way, in a specific frequency band from the frequency spectrum of the acoustic signal.

15. Apparatus for noise identification in acoustic signals according to one of Claims 1 to 14, **characterized in that** the apparatus also has a reclassification apparatus (**23**) which has means for reception of the respective classification signals (**22**) and/or respective initial identification signals, with the reclassification apparatus (**23**) producing and outputting at least one noise class signal (**24**) from this, which associates the acoustic signal with one or more noise categories.

16. Apparatus for measurement of the sound level of wind power installations (**42**), **characterized in that** this apparatus has an apparatus for noise identification in acoustic signals (**1**) according to one of Claims 1 to 15, which evaluates an acoustic signal which originates in the area surrounding the wind power installations, and whose output neurons produce at least one classification signal (**22**), which provide or provides a conclusion about the nature of the acoustic signal originating from the area surrounding the wind power installations, at least to such an extent that the acoustic signal is classified at least on the basis of the categories of wind power installation sound on the one hand and of no wind power installation sound on the other hand, with the acoustic signal being considered with respect to the measurement of the sound level only to the extent that it is classified by the apparatus for noise identification in acoustic signals as being wind power installation sound.

17. Apparatus for measurement of the sound level of wind power installations (**42**) according to Claim 16, **characterized in that** the output neurons produce at least one classification signal (**22**) which provides or provide a conclusion about the nature of the acoustic signal originating from the area surrounding wind power installations, at least if the acoustic signal is classified at least in the categories of wind power installation sound on the one hand and wind sound low-frequency or wind sound high-frequency on the other hand, with the acoustic signal being taken into account with respect to the measurement of the sound level only to the extent that it is classified by the apparatus for noise identification in acoustic signals and wind power installation sound.

18. Apparatus for measurement of the sound level of wind power installations (**42**) according to Claim 16, in particular to the extent that this claim refers back to Claim 5, **characterized in that** the output neurons produce at least one classification signal (**22**) which provides or provide a conclusion about the nature of the acoustic signal originating from the area surrounding wind power installations to the extent that the acoustic signal is classified at least in the categories of wind power installation sound on the one hand and not wind power installation sound on the other hand, and the initial identification apparatus produces at least one initial identification signal (**19, 20, 21**) which classifies the acoustic signal in the categories of tone, preferably wind tone, whistling tone, preferably wind whistling tone, and no tone, with the acoustic signal being taken into account with respect to the measurement of the sound level only to the extent that it is classified by the apparatus for noise identification in account signals as wind power installation sound.

19. Apparatus for measurement of the sound level of wind power installations (**42**), **characterized in that** the apparatus has an apparatus for noise identification in acoustic signals according to Claim 15, with this apparatus evaluating an acoustic signal which originates from the area surrounding wind power installations and with the reclassification apparatus producing at least one noise class signal (**24**) from this, which classifies or classify the acoustic signal at least as wind power installation sound or not wind power installation sound, with the acoustic signal being taken into account with respect to the measurement of the sound level only to the extent that it is classified by the apparatus for noise identification in acoustic signals as wind power installation sound.

**20.** Apparatus for measurement of the sound level of wind power installations (**42**) according to one of Claims 16 to 19, **characterized in that** an averaging apparatus is provided for averaging, preferably long-term averaging of the noise level measured during the operation of the wind power installation, with only those levels measured during operation of the wind power installation being taken into account by the averaging apparatus for formation of the mean value which result in an acoustic signal which has been classified by the apparatus for noise identification in acoustic signals as wind power installation sound.

**21.** Apparatus for measurement of the sound level of wind power installations (**42**) according to Claim 20, **characterized in that** a monitoring apparatus is also provided, and monitors the sliding average of the sound level measured during operation of the wind power installation until a limit value is exceeded.

**22.** Noise monitoring apparatus for measurement of the sound level from noise emission regions, in particular industrial noise regions, **characterized in that** this noise monitoring apparatus has an apparatus for noise identification in acoustic signals (**1**) according to one of Claims 1 to 15, which evaluates an acoustic signal measured in an immission area, preferably in a region which is adjacent to the noise emission region to be monitored, and whose output neurons produce at least one classification signal (**22**), which produces or produce a conclusion about the nature of the acoustic signal, at least if the acoustic signal is at least in the categories of noise emission region sound on the one hand and not noise emission region sound on the other hand.

**23.** Noise monitoring apparatus for measurement of the sound level of noise emission regions, in particular industrial noise regions, **characterized in that** this noise monitoring apparatus has an apparatus for noise identification in acoustic signals according to Claim 15, with this apparatus evaluating an acoustic signal which is measured in an immission area, preferably in a region adjacent to the noise emission region to be monitored, and the reclassification apparatus produces at least one noise class signal (**24**) from this, which classifies or classify the acoustic signal at least as noise emission region sound or not noise emission region sound.

**24.** Noise monitoring apparatus for measurement with the sound level from noise emission regions according to Claim 22 or 23, **characterized in that** the acoustic signal is taken into account for measurement of the sound level only to the extent that it is classified by the apparatus for noise identification in acoustic signals as noise emission region sound.

**25.** Noise monitoring apparatus for measurement of the sound level from noise emission regions according to Claim 22, 23 or 24, **characterized in that** the apparatus for noise identification in acoustic signals (1) evaluates an acoustic signal measured in the noise emission region to be monitored, and its output neurons produce at least one classification signal (**22**) which provides or provide a conclusion about the nature of the acoustic signal, and thus classifies or classify it.

**26.** Noise monitoring apparatus for measurement of the sound level for noise emission regions according to Claim 22, 23 or 24, **characterized in that** this noise monitoring apparatus furthermore also has an apparatus for noise identification in acoustic signals according to Claim 15, with this apparatus evaluating an acoustic signal measured in the noise emission region to be monitored, and with the reclassification apparatus producing at least one noise class signal (**24**) from this which classifies or classify the acoustic signal.

**27.** Noise monitoring apparatus for measurement of the sound level from noise emission regions according to Claim 25 or 26, **characterized in that** a central evaluation unit is additionally provided, which is connected to the immission measurement point and to the emission measurement point and initiate an alarm signal when an immission value is exceeded or there is a threat of it being exceeded, with the alarm signal being associated with a probable noise source, associated with this, on the basis of the classification signal or noise class signal produced from the evaluation of the acoustic signal measured in the noise emission region.

**Revendications**

**1.** Dispositif de reconnaissance du bruit dans les signaux acoustiques (1) avec au moins un dispositif de rééchelonnement (13), qui prévoit

des moyens servant respectivement à la réception de l'amplitude (12, 31) d'une bande de fréquences donnée provenant du spectre de fréquences du signal acoustique,

ainsi qu'un ou plusieurs moyens qui rééchelonne et/ou rééchelonnent cette amplitude ou ces amplitudes (12, 31) de sorte qu'après le rééchelonnement, les amplitudes n'existent plus les unes par rapport aux autres que dans leurs rapports relatifs

ainsi qu'un dispositif de différenciation (15),

qui prévoit un ou des moyens qui dérive et/ou dérivent au moins simplement l'amplitude rééchelonnée ou les amplitudes rééchelonnées (14, 31) par rapport au temps ou

qui dérive et/ou dérivent au moins simplement l'amplitude rééchelonnée ou les amplitudes rééchelonnées (14, 31) par rapport au temps puis forme et/ou forment à partir de l'amplitude dérivée par rapport au temps et/ou des amplitudes dérivées par rapport au temps (16b, 32) la valeur absolue respective sans signe négatif, ainsi qu'avec

un réseau neuronal (18) avec

des neurones d'entrée, des neurones de sortie et des liaisons pourvues de poids entre les neurones,

les neurones d'entrée étant respectivement prévus pour la réception de l'amplitude (16b, 32) rééchelonnées et dérivée par rapport au temps d'une bande de fréquences donnée provenant du spectre de fréquences du signal acoustique ou de sa valeur absolue respective

les neurones de sortie produisant au moins un signal de classification (22) qui classe le signal acoustique en fonction de son spectre de fréquences,

le signal de classification ou les signaux de classification fournissant des renseignements sur le type de signal acoustique.

2. Dispositif de reconnaissance du bruit dans les signaux acoustiques selon la revendication 1, **caractérisé en ce que** le dispositif de rééchelonnement (13) rééchelonne l'amplitude ou les amplitudes (12, 31) de telle sorte qu'après le rééchelonnement, les amplitudes n'existent plus les unes par rapport aux autres que dans leurs rapports relatifs, la somme de toutes les amplitudes (14, 31) étant égale à une constante après le rééchelonnement et les amplitudes (14, 31) étant dans le même rapport les unes par rapport aux autres avant le rééchelonnement qu'après le rééchelonnement, par paire.

3. Dispositif de reconnaissance du bruit dans les signaux acoustiques selon la revendication 2, **caractérisé en ce que** la constante choisie est le nombre un.

4. Dispositif de reconnaissance du bruit dans les signaux acoustiques selon l'une quelconque des revendications 1 à 3, **caractérisé en ce que** le réseau neuronal (18) comporte également des neurones d'entrée respectivement prévus pour la réception de l'amplitude (12, 31) ou de l'amplitude rééchelonnée (14, 16a, 31) d'une bande de fréquences donnée provenant du spectre de fréquences du signal acoustique.

5. Dispositif de reconnaissance du bruit dans les signaux acoustiques selon la revendication 4, **caractérisé en ce que** qu'il présente en outré un dispositif de préreconnaissance (17),

qui prévoit à son tour des moyens servant respectivement à la réception de l'amplitude (31) d'une bande de fréquences donnée provenant du spectre de fréquences du signal acoustique,

ainsi que des moyens servant respectivement à la réception de l'amplitude (32) dérivée par rapport au temps d'une bande de fréquences donnée provenant du spectre de fréquences du signal acoustique ou de sa valeur absolue, le dispositif de préreconnaissance produisant au moins un signal de préreconnaissance (19, 20, 21) qui classe le signal acoustique en fonction des catégories de son (19), de sifflement (20) et d'absence de son (21) et fournit d'autres renseignements sur le type de signal acoustique,

et le réseau neuronal étant activé par au moins un des signaux de préreconnaissance lorsque le signal acoustique est classé par le dispositif de préreconnaissance comme appartenant à la catégorie d'absence de son (21).

6. Dispositif de reconnaissance du bruit dans les signaux acoustiques selon la revendication 5, **caractérisé en ce qu'**un signal de préreconnaissance classant le signal acoustique dans la catégorie de son (19) est systématiquement produit par le dispositif de préreconnaissance lorsqu'au moins une amplitude d'une bande de fréquences donnée provenant du spectre de fréquences du signal acoustique se situe au-dessus d'une valeur seuil de son présélectionnée.

**7.** Dispositif de reconnaissance du bruit dans les signaux acoustiques selon la revendication 5 ou 6, **caractérisé en ce qu'**un signal de préreconnaissance classant le signal acoustique dans la catégorie de sifflement (20) est systématiquement produit par un dispositif de préreconnaissance lorsqu'au moins une amplitude dérivée par rapport au temps d'une bande de fréquences provenant du spectre de fréquences du signal acoustique ou de sa valeur absolue se situe au-dessus d'une valeur seuil de sifflement présélectionnée.

**8.** Dispositif de reconnaissance du bruit dans les signaux acoustiques selon la revendication 5, **caractérisé en ce qu'**un signal de préreconnaissance classant le signal acoustique dans la catégorie de son (19) est systématiquement produit par le dispositif de préreconnaissance lorsqu'une amplitude au moins d'une bande de fréquences donnée provenant du spectre de fréquences du signal acoustique se situe au-dessus d'une valeur seuil de son présélectionnée
et qu'un signal de préreconnaissance classant le signal acoustique dans la catégorie de sifflement (20) est systématiquement produit lorsqu'au moins une amplitude dérivée par rapport au temps d'une bande de fréquences donnée provenant du spectre de fréquences du signal acoustique ou de sa valeur absolue se situe au-dessus d'une valeur seuil de sifflement présélectionnée
et qu'un signal de préreconnaissance classant le signal acoustique dans la catégorie d'absence de son (21) est systématiquement produit lorsque le signal acoustique n'est ni classé dans la catégorie de son ni dans la catégorie de sifflement.

**9.** Dispositif de reconnaissance du bruit dans les signaux acoustiques selon la revendication 5, **caractérisé en ce que** le dispositif de préreconnaissance (17) prévu est une logique floue qui prévoit à son tour des moyens (30, 35) servant respectivement à la réception de l'amplitude d'une bande de fréquences donnée provenant du spectre de fréquences du signal acoustique,
ainsi que des moyens (36) servant respectivement à la réception de l'amplitude dérivée par rapport au temps d'une bande de fréquences donnée provenant du spectre de fréquences du signal acoustique ou de sa valeur absolue,
les amplitudes (31) ainsi réceptionnées ou les amplitudes dérivées et/ou leurs valeurs absolues (32) respectivement rendues floues, c'est-à-dire qu'elles sont représentées sur la variable linguistique (37) en fonction d'une fonction d'appartenance et
la logique floue inférant à l'aide d'une machine d'inférence les amplitudes (31) ainsi rendues floues et/ou les amplitudes dérivées par rapport au temps (32) ou leur valeur absolue à l'aide de règles (38) mémorisées dans une base de connaissances vers un ou plusieurs signaux de préreconnaissance (19, 20, 21) qui classe et/ou classent le signal acoustique dans des catégories de son, de sifflement et d'absence de son et fournit et/ou fournissent ainsi des renseignements sur le type de signal acoustique.

**10.** Dispositif de reconnaissance du bruit dans les signaux acoustiques selon la revendication 9, **caractérisé en ce que** le dispositif de préreconnaissance (17) prévu est une logique floue qui prévoit à son tour des moyens (30, 35) servant à la réception de l'amplitude maximale parmi une pluralité d'amplitudes appartenant à des bandes de fréquences données provenant du spectre de fréquences du signal acoustique,
ainsi qu'à la réception de la deuxième plus grande amplitude parmi une pluralité d'amplitudes appartenant à des bandes de fréquences données provenant du spectre de fréquences du signal acoustique,
ainsi que des moyens (36) servant à la réception de l'amplitude maximale dérivée par rapport au temps ou de sa valeur absolue parmi une pluralité d'amplitudes dérivées appartenant à des bandes de fréquences données ou de leurs valeurs absolues provenant du spectre de fréquences du signal acoustique,
les amplitudes (31) ainsi réceptionnées ou les amplitudes dérivées (32) et/ou leurs valeurs absolues respectivement rendues floues, c'est-à-dire qu'elles sont représentées sur la variable linguistique (37) en fonction d'une fonction d'appartenance,
la logique floue inférant à l'aide d'une machine d'inférence les amplitudes ainsi rendues floues et/ou les amplitudes dérivées par rapport au temps (32) ou leur valeur absolue à l'aide de règles (38) mémorisées dans une base de connaissances vers un ou plusieurs signaux de préreconnaissance (19, 20, 21) qui classe et/ou classent le signal acoustique en catégories de son, de sifflement et d'absence de son et fournit et/ou fournissent ainsi des renseignements sur le type de signal acoustique.

**11.** Dispositif de reconnaissance du bruit dans les signaux acoustiques selon l'une quelconque des revendications 1 à 10, **caractérisé en ce que** le dispositif présente en outre un dispositif de détermination du bruit de fond (10) dans les signaux acoustiques qui détermine respectivement l'amplitude de bruit de fond (11) d'une bande de fréquences donnée provenant du spectre de fréquences du bruit de fond respectif appartenant au signal acoustique, ledit dispositif
présentant des moyens servant respectivement à la réception de l'amplitude (31) respectivement actuellement mesurée d'une bande de fréquences donnée provenant du spectre de fréquences du signal acoustique et la détermination du bruit de fond à partir d'une amplitude de bruit de fond de départ fictive choisie élevée au début du fonctionnement étant réalisée de telle sorte que l'amplitude de bruit de fond (11) respective est systématiquement respectivement corrigée d'après une mesure effectuée de temps en temps de l'amplitude (31) actuelle de la bande de fréquences correspondante associée pour prendre la dernière valeur mesurée lorsque cette valeur mesurée était inférieure à la valeur de l'amplitude de bruit de fond (11) déterminée jusqu'alors de cette façon, et des moyens de sortie étant en outre prévus qui sortent les amplitudes de bruit de fond (11) déterminées d'une bande de fréquences donnée provenant du spectre de fréquences du signal acoustique.

**12.** Dispositif de reconnaissance du bruit dans les signaux acoustiques selon l'une quelconque des revendications 1 à 10, **caractérisé en ce que** le dispositif présente en outre un dispositif de détermination du bruit de fond (10) dans les signaux acoustiques qui détermine respectivement l'amplitude de bruit de fond (11) d'une bande de fréquences donnée provenant du spectre de fréquences du bruit de fond respectif appartenant au signal acoustique, ledit signal présentant des moyens servant respectivement à la réception de l'amplitude (31) respectivement actuellement mesurée d'une bande de fréquences donnée provenant du spectre de fréquences du signal acoustique, et la détermination du bruit de fond à partir d'une amplitude de bruit de fond de départ fictive choisie élevée au début du fonctionnement étant réalisée de telle sorte que l'amplitude de bruit de fond (11) respective est systématiquement respectivement corrigée d'après une mesure effectuée de temps en temps de l'amplitude (31) actuelle de la bande de fréquences associée pour prendre la dernière valeur mesurée lorsque cette valeur mesurée était inférieure à la valeur de l'amplitude de bruit de fond (11) déterminée jusqu'alors à laquelle vient s'ajouter une majoration constante déterminée, des moyens de sortie étant en outre prévus qui sortent les amplitudes de bruit de fond (11) déterminées d'une bande de fréquences donnée provenant du spectre de fréquences du signal acoustique.

**13.** Dispositif de reconnaissance du bruit dans les signaux acoustiques selon la revendication 11 ou 12, **caractérisé en ce qu'**avant chaque mesure réalisée de temps en temps de l'amplitude (31) actuelle, le dispositif de détermination du bruit de fond dans les signaux acoustiques (10) ajoute à l'amplitude de bruit de fond (11) respective déterminée jusqu'alors un supplément fixe déterminé.

**14.** Dispositif de reconnaissance du bruit dans les signaux acoustiques selon la revendication 11, 12 ou 13, **caractérisé en ce qu'**il présente en outre un dispositif d'élimination du bruit de fond (9) qui prévoit à son tour des moyens servant respectivement à la réception de l'amplitude (31) d'une bande de fréquences donnée provenant du spectre de fréquences du signal acoustique, ainsi que des moyens servant respectivement à la réception de l'amplitude de bruit de fond (11) d'une bande de fréquences donnée provenant du spectre de fréquences du bruit de fond respectif appartenant au signal acoustique, et des moyens retirant de l'amplitude (31) respective d'une bande de fréquences donnée provenant du spectre de fréquences du signal acoustique l'amplitude de bruit de fond (11) de la bande de fréquences correspondante provenant du spectre de fréquences du bruit de fond respectif appartenant au signal acoustique, ainsi que des moyens de sortie sortant l'amplitude ainsi libérée du bruit de fond ou les amplitudes (12) ainsi libérées du bruit de fond d'une bande de fréquences donnée provenant du spectre de fréquences du signal acoustique.

**15.** Dispositif de reconnaissance du bruit dans les signaux acoustiques selon l'une quelconque des revendications 1 à 14, **caractérisé en ce qu'**il présente en outre un dispositif de classification (23) présentant des moyens de réception des signaux de classification (22) respectifs et/ou des signaux de préreconnaissance respectifs, le dispositif de classification (23) produisant ou en déduisant au moins un signal de classe de bruit (24) qui associe le signal acoustique à une ou plusieurs catégories de bruit.

**16.** Dispositif de mesure du niveau d'intensité acoustique d'éoliennes (42), **caractérisé en ce que** celui-ci présente un dispositif de reconnaissance du bruit dans les signaux acoustiques (1) selon l'une quelconque des revendications 1 à 15, qui analyse un signal acoustique provenant des environs des éoliennes et dont les neurones de sortie produisent un ou plusieurs signaux de classification (22) qui fournit et/ou fournissent des renseignements sur le type de signal acoustique provenant des environs des éoliennes permettant au moins de classer le signal acoustique en fonction au moins des catégories de bruit d'éoliennes d'une part et d'absence de bruit d'éoliennes d'autre part, le signal acoustique n'étant pris en compte pour la mesure du niveau d'intensité acoustique que lorsqu'il est classé comme bruit d'éoliennes par le dispositif de reconnaissance du bruit dans les signaux acoustiques.

**17.** Dispositif de mesure du niveau d'intensité acoustique d'éoliennes (42) selon la revendication 16, **caractérisé en ce que** les neurones de sortie produisent un ou plusieurs signaux de classification (22) qui fournit et/ou fournissent des renseignements sur le type de signal acoustique provenant des environs des éoliennes permettant au moins le classement du signal acoustique en fonction des catégories de bruit d'éoliennes d'une part et de basse fréquence du bruit du vent ou de haute fréquence du bruit du vent d'autre part, le signal acoustique n'étant pris en compte pour la mesure du niveau d'intensité acoustique que lorsqu'il est classé comme bruit d'éoliennes par le dispositif de reconnaissance du bruit dans les signaux acoustiques.

18. Dispositif de mesure du niveau d'intensité acoustique d'éoliennes (42) selon la revendication 16, dans la mesure où celle-ci fait référence à la revendication 5, **caractérisé en ce que** les neurones de sortie produisent un ou plusieurs signaux de classification (22) qui fournit ou fournissent des renseignements sur le type de signal acoustique provenant des environs des éoliennes tels que le classement du signal acoustique au moins en fonction des catégories de bruit d'éoliennes d'une part et d'absence de bruits d'éoliennes d'autre part et le dispositif de préreconnaissance produisant au moins un signal de préreconnaissance (19, 20, 21) qui classe le signal acoustique en fonction des catégories de son, de préférence de son du vent, de sifflement, de préférence de sifflement du vent et d'absence de son, le signal acoustique n'étant pris en compte pour la mesure du niveau d'intensité acoustique que s'il est classé comme bruit d'éoliennes par le dispositif de reconnaissance du bruit dans les signaux acoustiques.

19. Dispositif de mesure du niveau d'intensité acoustique d'éoliennes (42), **caractérisé en ce que** celui-ci présente un dispositif de reconnaissance du bruit dans les signaux acoustiques selon la revendication 15, ce dispositif analysant le signal acoustique provenant des environs des éoliennes et le dispositif de classification en déduisant un ou plusieurs signaux de classe de bruit (24) qui classe et/ou classent le signal acoustique au moins comme bruit d'éoliennes ou comme absence de bruit d'éoliennes, le signal acoustique n'étant pris en compte pour la mesure du niveau d'intensité acoustique que s'il est classé comme bruit d'éoliennes par le dispositif de reconnaissance du bruit dans les signaux acoustiques.

20. Dispositif de mesure du niveau d'intensité acoustique d'éoliennes (42) selon l'une quelconque des revendications 16 à 19, **caractérisé en ce qu'**on prévoit un dispositif de réalisation de moyenne pour réaliser une moyenne, de préférence une moyenne sur le long terme, du niveau sonore mesuré lorsque l'éolienne fonctionne, seuls étant pris en compte pour former la moyenne les niveaux sonores mesurés par le dispositif de réalisation de moyenne pendant le fonctionnement de l'éolienne provoquant un signal acoustique classé comme bruit d'éoliennes par le dispositif de reconnaissance du bruit dans les signaux acoustiques.

21. Dispositif de mesure du niveau d'intensité acoustique d'éoliennes (42) selon la revendication 20, **caractérisé en ce qu'**on prévoit en outre un dispositif de surveillance qui surveillance la moyenne glissante du niveau d'intensité acoustique mesuré pendant le fonctionnement de l'éolienne jusqu'au dépassement d'une valeur limite.

22. Dispositif de surveillance du bruit pour mesurer le bruit sonore de zones d'émission de bruit, notamment de zones d'émission de bruit professionnel, **caractérisé en ce que** celui-ci présente un dispositif de reconnaissance du bruit dans les signaux acoustiques (1) selon l'une quelconque des revendications 1 à 15, qui analyse un signal acoustique mesuré dans une zone d'immission, de préférence dans une zone connexe à la zone d'émission de bruit à surveiller et dont les neurones de sortie produisent un ou plusieurs signaux de classification (22) qui fournit et/ou fournissent des renseignements sur le type de signal acoustique selon lequel le signal acoustique est classé au moins en fonction des catégories de bruit provenant d'une zone d'émission de bruit d'une part et d'absence de bruit provenant d'une zone d'émission de bruit d'autre part.

23. Dispositif de surveillance du bruit pour mesurer le niveau d'intensité acoustique de zones d'émission de bruit, notamment de zones d'émission de bruit professionnel, **caractérisé en ce que** celui-ci présente un dispositif de reconnaissance du bruit dans les signaux acoustiques selon la revendication 15, ce dispositif analysant le signal acoustique mesuré dans une zone d'immission, de préférence dans une zone connexe à une zone d'émission de bruit à surveiller et le dispositif de classification en déduisant un ou plusieurs signaux de classe de bruit (24) qui classe et/ou classent le signal acoustique au moins comme bruit provenant d'une zone d'émission de bruit ou comme absence de bruit provenant d'une zone d'émission de bruit.

24. Dispositif de surveillance du bruit pour mesurer le niveau d'intensité acoustique de zones d'émission de bruit selon la revendication 22 ou 23, **caractérisé en ce que** le signal acoustique n'est pris en compte pour la mesure du niveau d'intensité acoustique que s'il est classé comme bruit provenant d'une zone d'émission de bruit par le dispositif de reconnaissance du bruit dans les signaux acoustiques.

25. Dispositif de surveillance du bruit pour mesurer le niveau d'intensité acoustique de zones d'émission de bruit selon la revendication 22, 23 ou 24, **caractérisé en ce que** le dispositif de reconnaissance du bruit dans les signaux acoustiques (1) analyse un signal acoustique mesuré dans la zone d'émission de bruit à mesurer et dont les neurones de sortie produisent un ou plusieurs signaux de classification (22) qui fournit et/ou fournissent des informations sur le type de signal acoustique et ainsi le classe et/ou le classent.

26. Dispositif de surveillance du bruit pour mesurer le niveau d'intensité acoustique de zones d'émission de bruit selon la revendication 22, 23 ou 24, **caractérisé en ce que** celui-ci présente en outre un dispositif de reconnaissance du bruit dans les signaux acoustiques selon la revendication 15, ce dispositif analysant un signal acoustique mesuré dans la zone d'émission de bruit à mesurer et le dispositif de classification en déduisant un ou plusieurs signaux de classe de bruit (24) qui classe et/ou classent le signal acoustique.

27. Dispositif de surveillance du bruit pour mesurer le niveau d'intensité acoustique de zones d'émission de bruit selon la revendication 25 ou 26, **caractérisé en ce qu'**on prévoit en outre une unité d'analyse centrale reliée à la station de mesure d'immission et à la station de mesure d'émission et qui déclenche un message d'alarme lorsqu'une valeur indicative d'immission est dépassée ou qu'il y a un risque d'un tel dépassement, le message d'alarme correspondant au signal de classe de bruit ou au signal de classification produit à partir de l'analyse du signal acoustique mesuré dans la zone d'émission de bruit étant alors associé à une source de bruit vraisemblable.

FIG. 1

EP 1 092 964 B1

# FIG. 2

$A = \begin{Bmatrix} A_1 \\ A_2 \\ \vdots \\ A_n \end{Bmatrix}$ — **MAX$_A$** → MAX$_{A1}$ := MAX { A$_i$ | A$_i$ ∈ A } → **FUZZY MAX$_{A1}$** →

- MAX$_{A2}$ := { A$_i$ | A$_i$ ∈ A } \ MAX$_1$ →

$dA = \begin{Bmatrix} dA_1 \\ dA_2 \\ \vdots \\ dA_n \end{Bmatrix}$ — **MAX$_{DA}$** → MAX$_{DA}$ := MAX { A$_i$ | A$_i$ ∈ A }

**FUZZY MAX$_{A1}$** →
- MAX$_{A1}$ SIGNIFIKANT TONARTIG
- MAX$_{A1}$ TONARTIG
- MAX$_{A1}$ NICHT TONARTIG
- MAX$_{A1}$ SIGNIFIKANT NICHT TONARTIG

**FUZZY MAX$_{A2}$** →
- MAX$_{A2}$ TONARTIG
- MAX$_{A2}$ NICHT TONARTIG

**FUZZY MAX$_{DA}$** →
- PFEIFEN
- KEIN PFEIFEN

**DEFUZZ** →
- TON
- KEIN TON
- PFEIFTON

**WENN** MAX$_{A1}$ SIGNIFIKANT TONARTIG **DANN** *TON*
**WENN** MAX$_{A1}$ TONARTIG **UND** MAX$_{A2}$ TONARTIG **DANN** *TON*
**WENN** MAX$_{A1}$ SIGNIFIKANT NICHT TONARTIG **UND** (MAX$_{A1}$ NICHT TONARTIG **ODER** MAX$_{A2}$ NICHT TONARTIG) **DANN** *KEIN TON*
**WENN** PFEIFEN **DANN** *PFEIFTON*

FIG. 3

EP 1 092 964 B1

# FIG. 4

Emissionsmeßeinheit
Gewerbe

Emissionsmeßeinheit
Verkehr

Fernüberwachung
und Fernwartung

Zentrale
Auswerteeinheit

Meldesystem bei Überschreitungen durch
Gewerbelärm zur sofortigen Einleitung von organisatorischen Maßnahmen

Immissionsmeßeinheit

Datendokumentation und digitale
Audiospeicherung

EP 1 092 964 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9529413 A
- US 5501105 A
- DE 19740783 A1
- EP 0831310 A2

**In der Beschreibung aufgeführte Nicht-Patentliteratur**

- **NAUCK, D. et al.** Neuronale Netze. *Braunschweig/Wiesbaden,* 1994
- Technische Anleitung zum Schutz gegen Lärm - TA Lärm. *GMBI,* 1998, 503ff
- Ermittlung der Geräuschimmissionen zur TA Lärm. *GMBI,* 1998, 510ff
- **G.MANIER.** Ausbreitungsklassen und Temperaturgradienten. *Meteorologische Rundschau,* Marz 1975, vol. 28, 6-11